(19) Europäisches Patentamt
European Patent Office
Office européen des brevets

(11) **EP 4 697 722 A1**

(12) **EUROPEAN PATENT APPLICATION**
published in accordance with Art. 153(4) EPC

(43) Date of publication:
**18.02.2026 Bulletin 2026/08**

(21) Application number: **24789038.7**

(22) Date of filing: **11.04.2024**

(51) International Patent Classification (IPC):
*H04N 19/597* (2014.01)    *H04N 19/30* (2014.01)
*H04N 19/85* (2014.01)    *H04N 19/124* (2014.01)
*H04N 19/105* (2014.01)

(52) Cooperative Patent Classification (CPC):
**H04N 19/105; H04N 19/124; H04N 19/30;**
**H04N 19/597; H04N 19/85**

(86) International application number:
**PCT/KR2024/004826**

(87) International publication number:
**WO 2024/215096 (17.10.2024 Gazette 2024/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.04.2023 KR 20230046541**

(71) Applicant: **LG Electronics Inc.**
**Yeongdeungpo-gu**
**Seoul 07336 (KR)**

(72) Inventor: **PARK, Hanje**
**Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **MESH DATA TRANSMISSION DEVICE, MESH DATA TRANSMISSION METHOD, MESH DATA RECEPTION DEVICE, AND MESH DATA RECEPTION METHOD**

(57)    A mesh data decoding device according to embodiments may comprise: a base mesh decoding unit for decoding a base mesh from a base mesh bitstream; a displacement information decoding unit for decoding displacement information from a displacement vector bitstream; a reconstruction unit for reconstructing a mesh on the basis of the decoded base mesh and the decoded displacement information; and a texture map decoding unit for decoding a texture map from a texture map bitstream.

FIG. 16

**Description**

[Technical Field]

Embodiments provide a method for providing 3D content to provide a user with various services such as virtual reality (VR), augmented reality (AR), mixed reality (MR), and self-driving services.

[Background Art]

Point cloud data or mesh data in 3D content is a set of points in 3D space. However, it is difficult to create point cloud data or mesh data due to the large amount of points in 3D space.
In other words, a large throughput is required to transmit and receive 3D data with a considerable number of points, such as a point cloud or mesh data.

[Disclosure]

[Technical Problem]

An object of the present disclosure is to provide an apparatus and method for efficiently transmitting and receiving mesh data to resolve the aforementioned issue.
Another object of the present disclosure is to provide an apparatus and method to address the latency and encoding/decoding complexity of mesh data.
Another object of the present disclosure is to provide an apparatus and method that allow scalability to be reflected in mesh data.
Embodiments are not limited to the above-described objects, and the scope of the embodiments may be extended to other objects that can be inferred by those skilled in the art based on the entire contents of the present disclosure.

[Technical Solution]

To achieve these objects and other advantages and in accordance with the purpose of the present disclosure, as embodied and broadly described herein, an apparatus for decoding mesh data according to embodiments may include a base mesh decoder configured to decode a base mesh from a base mesh bitstream, a displacement information decoder configured to decode displacement information from a displacement vector bitstream, a reconstructor configured to reconstruct a mesh based on the decoded base mesh and the decoded displacement information, and a texture map decoder configured to decode a texture map from a texture map bitstream.
According to embodiments, the displacement information decoder may include a reconstructed mesh quality determiner configured to determine a target level of the mesh to be reconstructed, a parser configured to parse a partial displacement vector bitstream from the displacement vector bitstream based on the determined target level of the mesh, and a displacement vector decoder configured to decode the displacement information from the parsed partial displacement vector bitstream.
According to embodiments, the base mesh decoder may include a mesh subdivider configured to determine a number of iterations of subdivision based on the target level and to subdivide the base mesh based on the determined number of iterations of the subdivision.
According to embodiments, the texture map decoder may decode the texture map by parsing a partial texture map bitstream from the texture bitstream based on the target level.
According to embodiments, the displacement information decoder may further include a zero vector deriver configured to derive values of the displacement information for a specific level as zero vectors based on flag information included in received signaling information.
According to embodiments, the displacement information decoder may decode the displacement information based on at least one of video codec-based decoding, zero run-length decoding, or arithmetic decoding.
According to embodiments, an apparatus for encoding mesh data may include a base mesh processor configured to encode a base mesh generated by simplifying an original mesh to generate a base mesh bitstream, a displacement information processor configured to encode displacement information generated based on the base mesh to generate a displacement vector bitstream, a mesh reconstructor configured to reconstruct a mesh based on the encoded base mesh and the encoded displacement information, and a texture map processor configured to encode a texture map generated based on the original mesh and the reconstructed mesh to generate a texture map bitstream.
According to embodiments, the base mesh processor may include a mesh subdivider configured to subdivide the base mesh at least once to generate additional vertices and to determine levels varying with a number of iterations of the subdivision.

According to embodiments, the displacement information processor may encode the displacement information for each of the determined levels to generate the displacement vector bitstream.

According to embodiments, the displacement information processor may skip, based on that values of the displacement information for a specific level among the levels are zero vectors, the encoding for the specific level, and transmit, in signaling information, flag information indicating that the encoding of the displacement information for the specific level is skipped.

According to embodiments, the displacement information processor may encode the displacement information based on at least one of video codec-based encoding, zero run-length encoding, or arithmetic encoding.

According to embodiments, the displacement information processor may include a packer configured to pack the displacement information into an image to encode the displacement information based on the video codec-based encoding, wherein the packer may pack the displacement information for each level into each image.

According to embodiments, a method of transmitting mesh data may include encoding an original mesh, and transmitting a bitstream containing the encoded mesh and signaling information.

According to embodiments, the encoding may include base mesh processing including encoding a base mesh generated by simplifying the original mesh, and generating a base mesh bitstream; displacement information processing including encoding displacement information generated based on the base mesh, and generating a displacement vector bitstream; mesh reconstruction including reconstructing a mesh based on the encoded base mesh and the encoded displacement information; and texture map processing including encoding a texture map generated based on the original mesh and the reconstructed mesh, and generating a texture map bitstream.

According to embodiments, the base mesh processing may further include generating additional vertices by subdividing the base mesh at least once, and determining levels varying with a number of iterations of the subdivision.

According to embodiments, the displacement information processing may further include encoding the displacement information for each of the determined levels and generating the displacement vector bitstream.

According to embodiments, the displacement information processing may further include based on that values of the displacement information for a specific level among the levels are zero vectors, skipping the encoding for the specific level, and transmitting, in the signaling information, flag information indicating that the encoding of the displacement information for the specific level is skipped.

According to embodiments, a computer program stored on a computer-readable recording medium may be coupled to a computer that is hardware to execute the method above.

[Advantageous Effects]

A mesh data transmission method, mesh data transmission apparatus, mesh data reception method, and mesh data reception apparatus according to embodiments may provide good-quality 3D services.

A mesh data transmission method, mesh data transmission apparatus, mesh data reception method, and mesh data reception apparatus according to embodiments may achieve various video codec schemes.

A mesh data transmission method, mesh data transmission apparatus, mesh data reception method, and mesh data reception apparatus according to embodiments provide universal 3D content such as an autonomous driving service.

A mesh data transmission method, mesh data transmission apparatus, mesh data reception method, and mesh data reception apparatus according to embodiments may enable scalable encoding and decoding of displacement information and/or texture maps included in mesh data, thereby enabling layer-based encoding/decoding of mesh data and further allowing selective reconstruction mesh content having optimal resolution and image quality for a service according to network and reception environments.

A mesh data transmission method, mesh data transmission apparatus, mesh data reception method, and mesh data reception apparatus according to embodiments may allow a user to selectively reconstruct mesh data based on mesh subdivision levels up to an available level according to the performance of the receiver, display characteristics, or network environment. Further, when multiple mesh data objects need to be represented, the methods and apparatuses may allow the user may different degrees of precision and levels of mesh data to be reconstructed depending on the importance, frequency of use, and current use of each object, and reconstruct each object to the desired level, thereby appropriately distributing and efficiently using given resources.

A mesh data transmission method, mesh data transmission apparatus, mesh data reception method, and mesh data reception apparatus according to embodiments may allow mesh data to be utilized in more diverse network environments and applications, and further expand the usability of mesh data by flexibly using the resources of the receiver.

A mesh data transmission method, mesh data transmission apparatus, mesh data reception method, and mesh data reception apparatus according to embodiments may reduce the amount of displacement vector bits to be transmitted by skipping encoding of displacement vector transform coefficients of a specific level and transmitting a 1-bit flag instead when the displacement vector transform coefficients of the specific level are zero vectors.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process for V-MESH data according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process for V-MESH data according to embodiments;
FIG. 12 illustrates an inter-frame decoding process for V-MESH data according to embodiments;
FIG. 13 illustrates a transmission apparatus according to embodiments;
FIG. 14 illustrates a reception apparatus according to embodiments;
FIG. 15 illustrates another example of a transmission apparatus according to the embodiments;
FIG. 16 is a detailed block diagram of a displacement vector encoder according to embodiments;
FIG. 17 illustrates an example of the structure of displacement vector transform coefficients according to embodiments;
FIG. 18 illustrates an example of packing of displacement vector transform coefficients according to embodiments;
FIGS. 19-(a) to 19-(c) illustrate examples of generating a displacement vector video by packing displacement vector transform coefficients into one or more images according to embodiments;
FIG. 20 illustrates an example of a sub-picture-based displacement vector transform coefficient packing method according to embodiments;
FIG. 21 illustrates another example of a reception apparatus according to embodiments;
FIG. 22 is an example detailed block diagram of a displacement vector decoder according to embodiments;
FIG. 23 is an example detailed block diagram of a reconstructed mesh quality determiner according to embodiments;
FIG. 24 is an example detailed block diagram of a geometry information quality determiner according to embodiments;
FIG. 25 illustrates an example syntax structure of signaling information according to embodiments;
FIG. 26 is a flowchart illustrating an example of a transmission method according to embodiments; and
FIG. 27 is a flowchart illustrating an example of a reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

With recent advancements in 3D data modeling and rendering technologies, research on generating and processing 3D data has been actively conducted across various fields, including virtual reality (VR), augmented reality (AR), autonomous driving, computer-aided design (CAD)/computer-aided manufacturing (CAM), and geographic information systems (GIS). 3D data may be represented as a point cloud or a mesh depending on the representation format. A mesh is composed of geometry information indicating the coordinates of each vertex or point, connectivity information indicating connections between vertices, a texture map representing color information about the mesh surface as 2D image data, and texture coordinates indicating the mapping information between the surface of the mesh and the texture map. In the present disclosure, a mesh is defined as a dynamic mesh when at least one of the elements constituting the mesh changes over time, and is defined as a static mesh when it does not change.

Dynamic mesh data involves significantly larger amounts of data of elements to represent the mesh compared to 2D image data. As a result, techniques for efficiently compressing a large amount of mesh data have been developed to store and transmit the data.

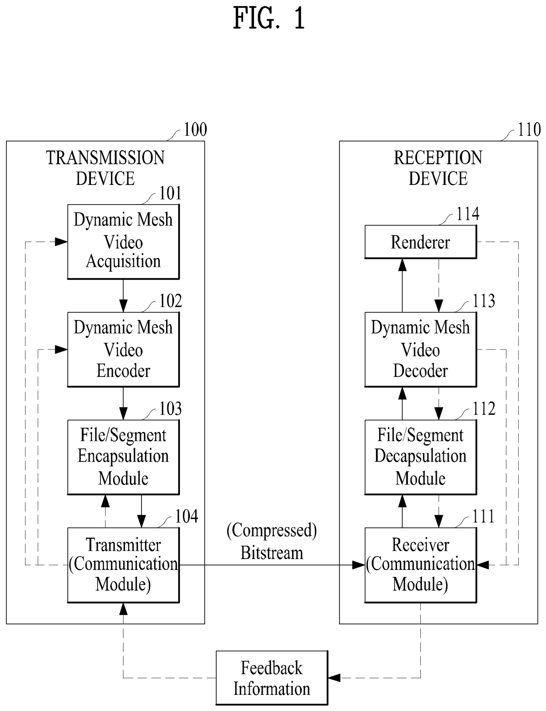

FIG. 1 illustrates a system for providing dynamic mesh content according to embodiments.

The system in FIG. 1 includes a transmission apparatus 100 and a reception apparatus 110. The transmission apparatus 100 may include a mesh video acquisition unit (or part) 101, a mesh video encoder 102, a file/segment encapsulator 103, and a transmitter 104. The reception apparatus 110 may include a receiver 111, a file/segment decapsulator 112, a mesh video decoder 113, and a renderer 114. Each component in FIG. 1 may correspond to hardware, software, a processor, and/or a combination thereof. In the following description, a mesh data transmission apparatus according to embodiments may be interpreted as referring to a 3D data transmission apparatus or transmission apparatus 100, or as referring to a mesh video encoder (hereinafter, encoder) 102. A mesh data reception apparatus according to embodiments may be interpreted as referring to a 3D data reception apparatus or reception apparatus 110, or as referring to a mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique for point cloud data. Point cloud data is data that has color information in the coordinates (X, Y, Z) of vertices (or points). In the present disclosure, vertex coordinates (i.e., position information) are referred to as geometry information, color information about vertices is referred to as attribute information. The geometry information and attribute information are together referred to as vertex information or point cloud data. Mesh data refers to vertex information including inter-vertex connectivity information. Content may be originally created in the form of mesh data. Alternatively, connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a mesh video. The generated mesh video may be transmitted through a series of operations, and the receiving side may process the received data back into a mesh video for rendering. Through this process, the mesh video may be provided to the user, allowing the user to utilize the mesh content interactively according to their intent.

As shown in FIG. 1, a mesh compression system may include a transmission apparatus 100 and a reception apparatus 110. The transmission apparatus 100 may encode the mesh video to output a bitstream, which may be delivered to the reception apparatus 110 over a digital storage medium or a network in the form of file or streaming (streaming segments). The digital storage medium may include various storage media such as USB, SD, CD, DVD, Blu-ray, HDD, and SSD.

In the transmission apparatus 100, the encoder may be referred to as a mesh video/image/picture/frame encoding device. In the reception apparatus 110, the decoder may be referred to as a mesh video/image/picture/frame decoding device. A transmitter may be included in the mesh video encoder, and a receiver may be included in the mesh video decoder. The renderer 114 may include a display, and the renderer and/or display may be configured as separate devices or external components. The transmission apparatus 100 and reception apparatus 110 may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinate related to mesh vertices, referred to as UV coordinates or texture coordinates, related to related to the vertices of the mesh. A mesh contains a 2D attribute map, which may be used to store high-resolution attribute information such as texture, normal, and displacement. Here, the displacement may be used interchangeably with displacement information or a displacement vector.

The mesh video acquisition unit 101 may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder 102 may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/-frames/pictures. The mesh video encoder 102 may perform a Video-based Dynamic Mesh (V-Mesh) compression procedure. For compression and coding efficiency, the mesh video encoder 102 may perform a series of procedures such as prediction, transformation, quantization, and entropy coding. Encoded data (encoded video/image information) may be output in the form of a bitstream.

The file/segment encapsulation module 103 may encapsulate encoded mesh video data and/or mesh video-related metadata in the form of a file or the like. The mesh video-related metadata may be received from a metadata processor. The metadata processing unit may be included in the mesh video encoder 102, or may be configured as a separate component/module. The file/segment encapsulation module 103 may encapsulate the data into a file format such as ISOBMFF or process the same into forms such as DASH segments. According to embodiments, the file/segment encapsulator 103 may include the mesh video-related metadata in the file format. For example, the mesh video metadata may be included in boxes at various levels in the ISOBMFF file format, or as data on separate tracks in the file. In some embodiments, the file/segment encapsulator 103 may encapsulate the mesh video-related metadata into a file.

The transmission processor may apply processing to the encapsulated mesh video data for transmission based on the file format. The transmission processor may be included in the transmitter 104 or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter 104 may transmit the encoded video/image information or data output in bitstream form to the receiver 111 of the reception apparatus 110 over a digital storage medium or network in the form of a file or streaming. The digital storage medium may include various storage media such as USB, SD, CD, DVD, Blu-ray, HDD, and SSD. The transmitter 104 may include an element to generate a media file through a predetermined file format, and may include an element for transmission over a broadcast/communication network. The receiver 111 may extract the bitstream and deliver the same to a decoding device.

The receiver 111 may receive the mesh video data transmitted by the mesh data transmission apparatus. Depending on the channel for transmission, the receiver 111 may receive the mesh video data over a broadcast network or a broadband network, or may receive the mesh video data over a digital storage medium.

The reception processor may perform processing on the received mesh video data according to the transmission protocol. The reception processor may be included in the receiver 111, or may be configured as a separate component/module. To correspond to the processing performed for transmission on the transmitting side, the reception processor may perform the reverse process to the operations of the transmission processor described above. The reception processor may deliver the acquired mesh video data to the file/segment decapsulator 112 and the acquired mesh video-related metadata to the metadata parser. The mesh video-related metadata acquired by the reception processor may be in the form of a signaling table.

The file/segment decapsulator 112 may decapsulate mesh video data in the form of files received from the reception processor. The file/segment decapsulator 112 may decapsulate the files according to ISOBMFF or the like to acquire a mesh video bitstream or mesh video-related metadata (metadata bitstream). The acquired mesh video bitstream may be delivered to the mesh video decoder 113, and the acquired mesh video-related metadata (metadata bitstream) may be delivered to the metadata processor. The mesh video bitstream may include metadata (metadata bitstream). The metadata processor may be included in the mesh video decoder 113, or may be configured as a separate component/-module. The mesh video-related metadata acquired by the file/segment decapsulator 112 may be in the form of boxes or tracks in the file format. The file/segment decapsulator 112 may receive metadata required for decapsulation from the metadata processor, when necessary. The mesh video-related metadata may be delivered to the mesh video decoder 113 for use in the mesh video decoding procedure, or to the renderer 114 for use in the mesh video rendering procedure.

The mesh video decoder 113 may receive the input bitstream and perform the reverse operation corresponding to the operation of the mesh video encoder 102 to decode the video/images. The decoded mesh video/images may be displayed through the display of the renderer 114. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to embodiments of dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an M×N block may include a set (or array) of samples (or a sample array) or transform coefficients composed of M columns and N rows.

As described above, the encoding process of FIG. 1 is performed as follows.

In other words, the compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video. The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

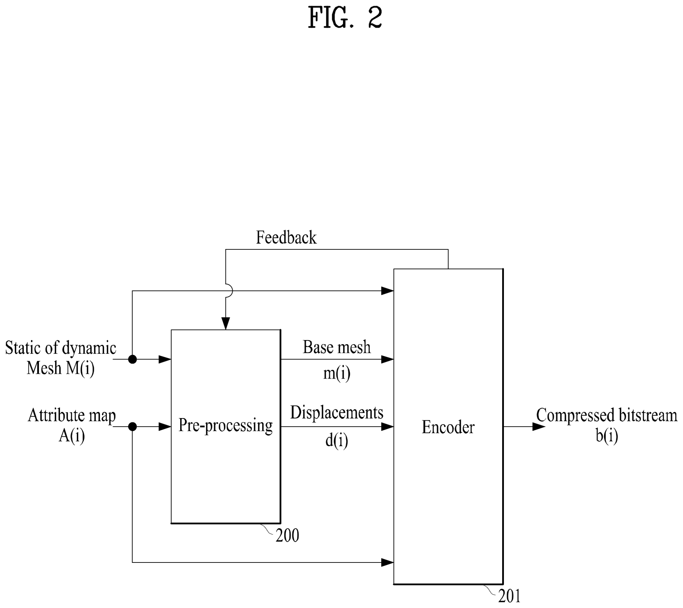

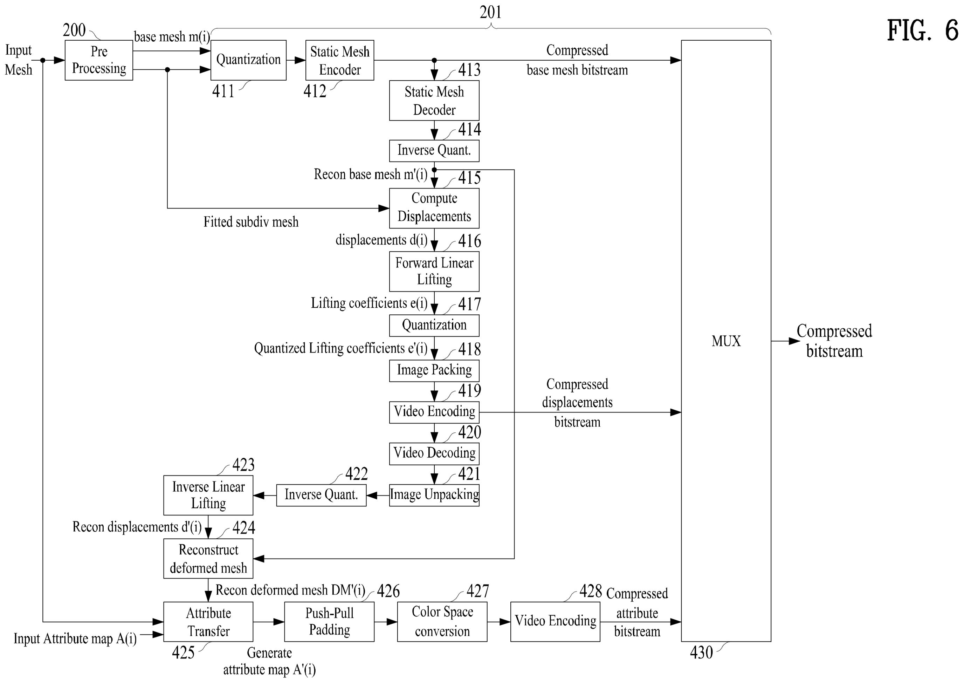

A method of encoding mesh position information (or vertex position information) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The mesh video encoder 102 of FIG. 1 may include a pre-processor 200 and an encoder 201, as shown in FIG. 2. Also, the transmission apparatus of FIG. 1 may be broadly referred to as an encoder, and the mesh video encoder 102 of FIG. 1 may be referred to as an encoder. The V-Mesh compression method may include pre-processing 200 and encoding 201, as shown in FIG. 2. The pre-processor 200 of FIG. 2 may be positioned at the front end of the encoder 201 of FIG. 2. The pre-processor 200 and encoder 201 of FIG. 2 may be referred to as a single encoder.

The pre-processor 200 may receive a static of dynamic mesh (M(i)) and/or an attribute map (A(i)). The pre-processor 200 may generate a base mesh m(i) and/or displacements d(i) through pre-processing. The pre-processor 200 may receive feedback information from the encoder 201, and may generate the base mesh and/or displacements based on the feedback information.

The encoder 201 may receive the base mesh m(i), the displacements d(i), the static of dynamic mesh M(i), and/or the attribute map A(i). In the present disclosure, at least one of the base mesh m(i), the displacements d(i), the static of dynamic mesh M(i), and/or the attribute map A(i) may be referred to herein as mesh-related data. The encoder 201 may encode the mesh-related data to generate a compressed bitstream.

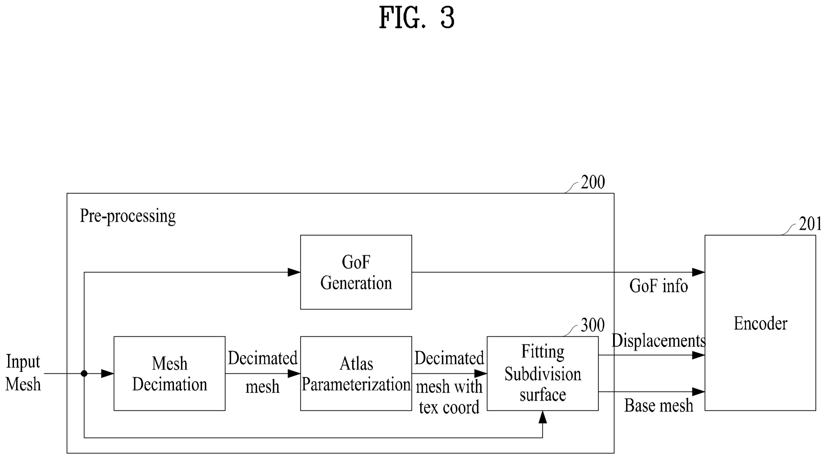

FIG. 3 illustrates pre-processing in V-MESH compression according to embodiments.

FIG. 3 illustrates the configuration and operation of the pre-processor of FIG. 2. In FIG. 3, the input mesh may include a static of dynamic mesh M(i) and/or attribute map A(i). The input mesh may also include 3D coordinates of vertices constituting the mesh, normal information about each vertex, mapping information for mapping the mesh surface to a 2D plane, and connectivity information between the vertices constituting the surface.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface

(300). According to embodiments, the GoF generation may be referred to as a GoF generation process or a GoF generator, the mesh decimation may be referred to as a mesh simplification process or the mesh decimation part, the UV parameterization may be referred to as a UV parameterization process or the UV parameterization part, and the fitting subdivision surface may be referred to as a fitting subdivision surface process or a fitting subdivision surface part. The pre-processor 200 may generate displacements and/or a base mesh from the received input mesh, and deliver the same to the encoder 201. The pre-processor 200 may deliver GoF information related to the GoF generation to the encoder 201.

Hereinafter, each operation of FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, the encoder 201 may perform inter frame encoding. Otherwise, it performs intra frame encoding for the frame.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface (300): A process of performing subdivision on the decimated mesh (i.e., a decimated mesh with texture coordinates). The displacements and base mesh generated by this process are output to the encoder 201. A user-defined method, such as the mid-edge method, may be applied as the subdivision method. A fitting process is performed such that the input mesh and the subdivided mesh become similar to each other. The mesh on which the fitting process is performed will be referred to herein as the fitted subdivided mesh.

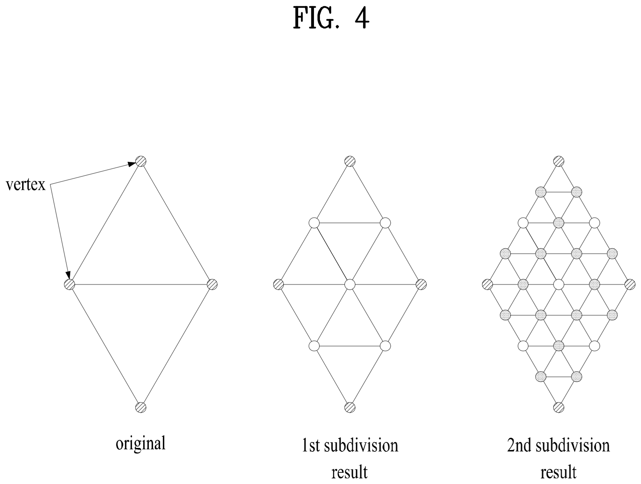

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices. Then, the fitting process is performed to make the input mesh and the sub-mesh similar to each other, resulting in a fitted subdivided mesh.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

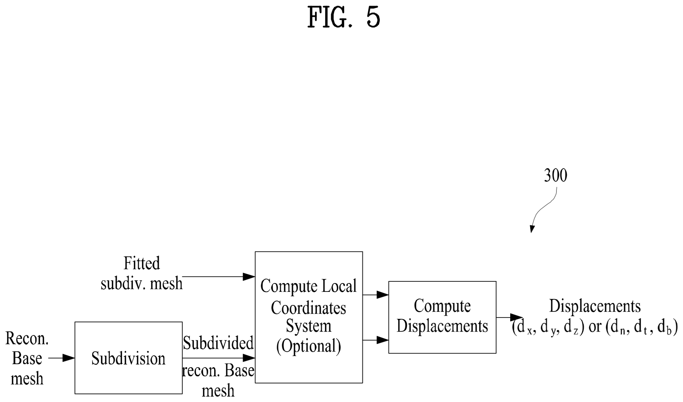

FIG. 5 illustrates a displacement generation process according to embodiments. The displacement generation process of FIG. 5 may be performed by the pre-processor 200, or may be performed by the encoder 201.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may perform a subdivision on the reconstructed base mesh to generate a subdivided reconstructed base mesh. Here, the reconstruction of the base mesh may be performed by the pre-processor 200, or may be performed by the encoder 201. The local coordinate system calculator may receive the fitted subdivided mesh and the subdivided reconstructed base mesh, and may transform the coordinate system related to the mesh to a local coordinate system based on the received meshes. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The mesh data transmission method and apparatus according to embodiments may encode the mesh data as follows. Mesh data is a term that includes point cloud data. Point cloud data (which may be referred to as a point cloud for short) according to embodiments may refer to data including vertex coordinates (also referred to as geometry information) and color information (also referred to as attribute information). In addition, a geometry image, an attribute image, an occupancy map, and auxiliary information (also referred to as patch information) generated through patch generation and packing based on vertex coordinates and color information may also be referred to as point cloud data. Therefore, point cloud data including connectivity information may be referred to as mesh data. The terms point cloud and mesh data may be used interchangeably herein.

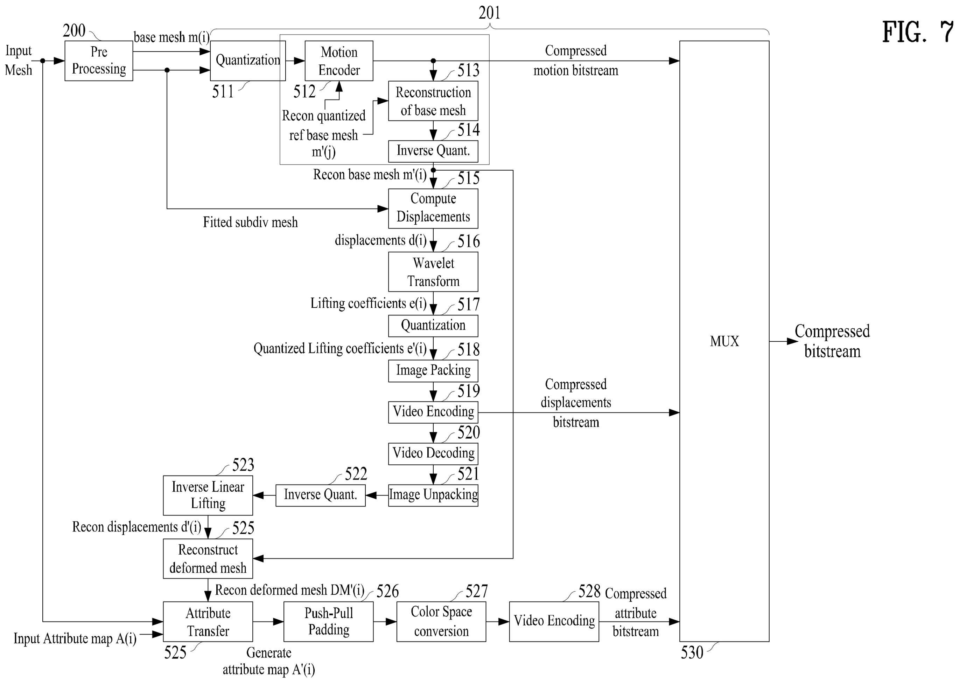

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments. Each component for the intra-frame encoding process of FIG. 6 corresponds to hardware, software, a processor, and/or a combination thereof.

The encoding process of FIG. 6 details the encoding of the mesh video encoder 102 of FIG. 1. That is, it represents the configuration of the mesh video encoder 102 when the encoding of FIG. 1 is intra-frame encoding. The encoder of FIG. 6 may include a pre-processor 200 and/or an encoder 201. The pre-processor 200 and encoder 201 of FIG. 6 may correspond to the pre-processor 200 and encoder 201 of FIG. 3.

The pre-processor 200 may receive an input mesh and perform the pre-processing described above. A base mesh and/or a fitted subdivided mesh may be generated through the pre-processing.

The quantizer 411 of the encoder 201 may quantize the base mesh and/or the fitted subdivided mesh. The static mesh encoder 412 may encode the static mesh (i.e., the quantized base mesh) and generate a bitstream containing the encoded base mesh (i.e., a compressed base mesh bitstream). The static mesh decoder 413 may decode the encoded static mesh (i.e., the encoded base mesh). The inverse quantizer 414 may inversely quantize the quantized static mesh (i.e., base mesh) and output a reconstructed (restored) base mesh. The displacement calculator 415 may generate a displacement or displacements based on the reconstructed static mesh (i.e., base mesh) and the fitted subdivided mesh. According to embodiments, the displacement calculator 415 subdivides the reconstructed base mesh and then calculates a displacement, which is the difference in position of each vertex between the subdivided base mesh and the fitted subdivided mesh. In other words, the displacement is a displacement vector that is the difference in position between the vertices in the two meshes when the fitted subdivided mesh is similar to the original mesh. The forward linear lifter 416 may perform a lifting transform on the input displacements to generate lifting coefficients (also referred to as a transform coefficient). The quantizer 417 may quantize the lifting coefficients. The image packer 418 may pack the image based on the quantized lifting coefficients. The video encoder 419 may encode the packed image. That is, the quantized lifting coefficients are packed into a frame as a 2D image by the image packer 418, compressed by the video encoder 419, and output as a displacement bitstream (i.e., a compressed displacement bitstream).

The video decoder 420 decodes the compressed displacement bitstream. The image unpacker 421 may perform unpacking on the decoded displacement frame to output quantized lifting coefficients. The inverse quantizer 422 may inversely quantize the quantized lifting coefficients. The inverse linear lifting unit 423 applies inverse lifting to the inversely quantized lifting coefficients to generate reconstructed displacements. The mesh reconstructor 424 restores the reconstructed and deformed mesh based on the reconstructed displacements output from the inverse linear lifting unit 423 and the reconstructed base mesh (also referred to as the subdivided reconstructed base mesh) output from the inverse quantizer 414. The reconstructed and deformed mesh is referred to herein as the reconstructed deformed mesh.

The attribute transfer 425 receives an input mesh and/or an input attribute map and regenerates an attribute map based on the reconstructed deformed mesh. The attribute map refers to a texture map corresponding to attribute information among the mesh data components. In the present disclosure, the terms attribute map and texture map may be used interchangeably. The push-pull padding unit 426 may pad data to the attribute map based on a push-pull method. The color space converter 427 may convert the space of the color components of the attribute map. For example, the attribute map may be converted from an RGB color space to a YUV color space. The video encoder 428 may encode the attribute map to output a compressed attribute bitstream.

The multiplexer 430 may multiplex the compressed base mesh bitstream, the compressed displacement bitstream, and the compressed attribute bitstream to generate a compressed bitstream.

In FIG. 6, the displacement calculator 415 may be included in the pre-processor 200. Additionally, at least one of the quantizer 411, the static mesh encoder 412, the static mesh decoder 413, or the inverse quantizer 414 may be included in the pre-processor 200.

As described in FIG. 6, the intra frame encoding method includes base mesh encoding (also referred to as static mesh encoding). That is, when intra frame encoding is performed on the current input mesh frame, the base mesh generated during the pre-processing of the pre-processor 200 may be quantized by the quantizer 411 and then encoded by the static mesh encoder 412 using a static mesh compression technique. In the V-Mesh compression method, for example, the Draco technique is applied to encode the base mesh, and the vertex position information, mapping information (texture coordinates), vertex connectivity information, and the like related to the base mesh are subject to compression.

The encoder in FIG. 6 compresses the base mesh, displacements, and attributes in a frame to generate a bitstream, while the encoder in FIG. 7 compresses the motion, displacements, and attributes between the current frame and a reference frame to generate a bitstream.

FIG. 7 illustrates an inter-frame encoding process in a V-MESH compression method according to embodiments. Each component for the inter-frame encoding process of FIG. 7 corresponds to hardware, software, a processor, and/or a combination thereof.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201. The pre-processor 200 and encoder 201 of FIG. 7 may correspond to the pre-processor 200 and encoder 201 of FIG. 3.

For the components of the encoding operation of FIG. 7 that correspond to the encoding operation of FIG. 6, refers to the description of FIG. 6. That is, the operations of the quantizer 511, displacement calculator 515, wavelet transformer 516, quantizer 517, image packer 518, video encoder 519, video decoder 520, image unpacker 521, inverse quantizer 522, and inverse wavelet transformer 523, mesh reconstructor 524, attribute transfer 525, push-pull padding 526, color space converter 527, video encoder 528, and multiplexer 530 in FIG. 7 are the same as or similar to the operations of the quantizer 411, static mesh encoder 412, static mesh decoder 413, and inverse quantizer 414, displacement calculator 415, forward linear lifting unit 416, quantizer 417, image packer 418, video encoder 419, video decoder 420, image unpacker 421, inverse quantizer 422, inverse linear lifting unit 423, and mesh reconstructor 424, attribute transfer 425, push-pull padding 426, color space converter 427, video encoder 428, and multiplexer 430 in FIG. 6 described above, and are therefore not described in detail in relation to FIG. 7 to avoid redundancy.

In FIG. 7, for inter-frame-based encoding, the motion encoder 512 may obtain and encode a motion vector between the reconstructed quantized reference base mesh and the quantized current base mesh, and output a

EP 4 697 722 A1

compressed motion bitstream. The motion encoder 512 may be referred to as a motion vector encoder. The base mesh reconstructor 513 may reconstruct a base mesh based on the reconstructed quantized reference base mesh and the encoded motion vectors. The reconstructed base mesh is inversely quantized by the inverse quantizer 514 and output to the displacement calculator 515.

In FIG. 7, the displacement calculator 515 may be included in the pre-processor 200. Additionally, at least one of the quantizer 511, motion encoder 512, base mesh reconstructor 513, or inverse quantizer 514 may be included in the pre-processor 200.

As described with reference to FIG. 7, the inter-frame encoding method may include motion field encoding (also referred to as motion vector encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field (or motion vector) may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of the residual motion field may be encoded using entropy coding. Except for the motion field encoding in the inter frame encoding, the process of encoding the displacements and attribute map is the same as the structure of the intra frame encoding method except for the base mesh encoding.

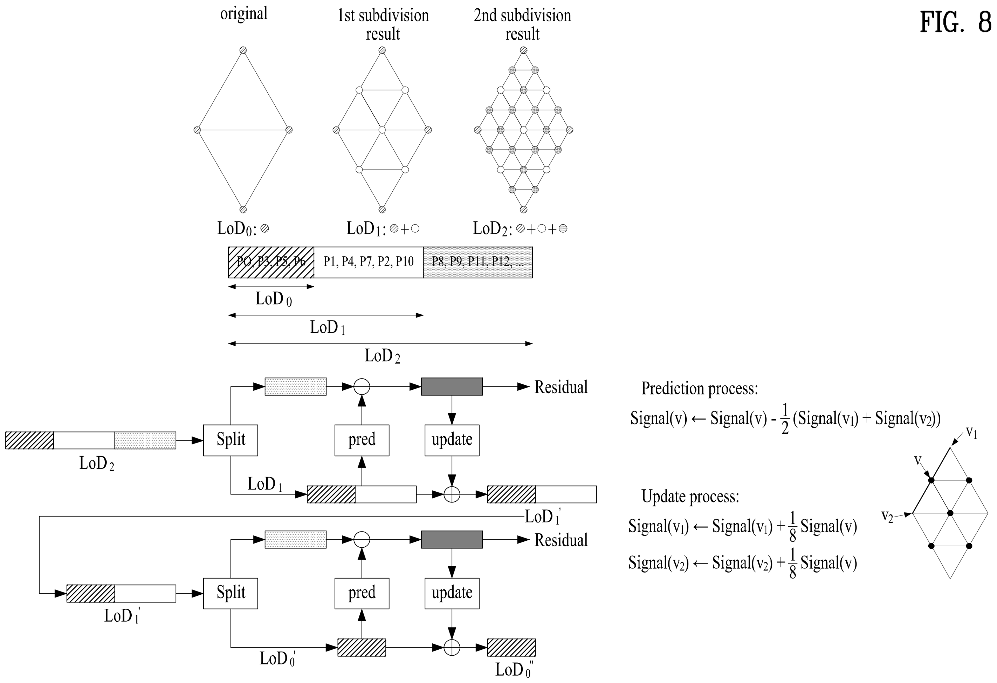

FIG. 8 illustrates a lifting transform process for displacements according to embodiments.

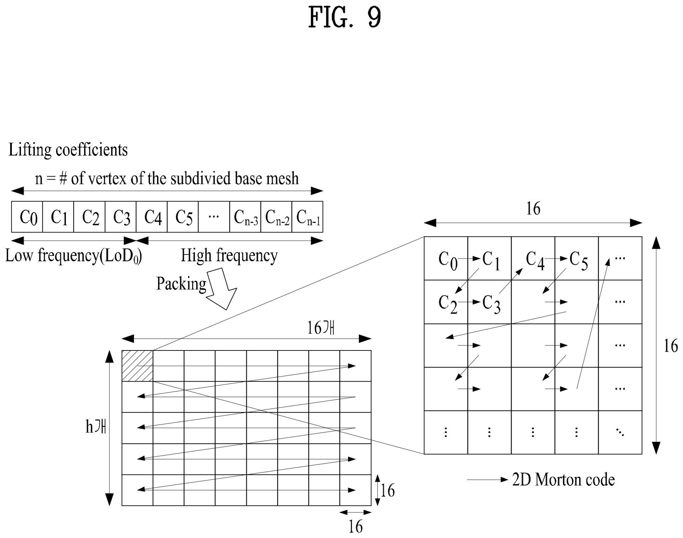

FIG. 9 illustrates a process of packing transform coefficients (also referred to as lifting coefficients) into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface (see 415 in FIG. 6 or 515 in FIG. 7). A data transform process, such as a wavelet transform, may be applied to the displacement information for effective encoding (see 416 in FIG. 6, or 516 in FIG. 7).

FIG. 8 illustrates the process of transforming displacement information by the forward linear lifting unit 416 of FIG. 6 or the wavelet transformer 516 of FIG. 7 using the lifting transform. For example, a linear wavelet-based lifting transform may be performed. The transform coefficients generated through the transform process are quantized by the quantizer 417 (or 517) and then packed into a 2D image by the image packer 418 (or 518), as shown in FIG. 9. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded by the video encoder 419 (or 519) using a conventional video compression codec.

Referring to FIG. 8, the base mesh (original) may include vertices and edges for LoD0. A first subdivision mesh generated by splitting (or subdividing) the base mesh includes vertices generated by further splitting (or subdividing) the edges of the base mesh. The first subdivision mesh contains vertices for LoD0 and vertices for LoD1. LoD1 includes subdivided vertices and vertices from the base mesh (LoD0). The first subdivision mesh may be split (or subdivided) to generate a second subdivision mesh. The second subdivision mesh contains LoD2. LoD2 includes a base mesh vertex (LoD0), LoD1 containing vertices further split (or subdivided) from LoD0, and LoD2 containing vertices further split (or subdivided) from LoD1. LoD is a level of detail that indicates how detailed the mesh data content is. As the index of the level increases, the distance between vertices is shortened, and the level of detail rises. In other words, as the value of LoD decreases, the detail of the mesh data content is degraded. As the value of LoD increases, the detail of the mesh data content is enhanced. LoD N contains the vertices contained in LoD N-1. In the case where the mesh (or vertex) is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated through the residual. In the present disclosure, vertex and point may be used interchangeably. The LoDs may be defined in the subdivision of the base mesh. According to embodiments, the subdivision of the base mesh may be performed by the pre-processor 200 or may be performed by a separate component/module.

Referring to FIG. 9, a vertex has a transform coefficient (also referred to as a lifting coefficient) generated through lifting transform. The transform coefficient of the vertex related to the lifting transform may be packed into an image by the image packer 418 (or 518) and then encoded by the video encoder 419 (or 519).

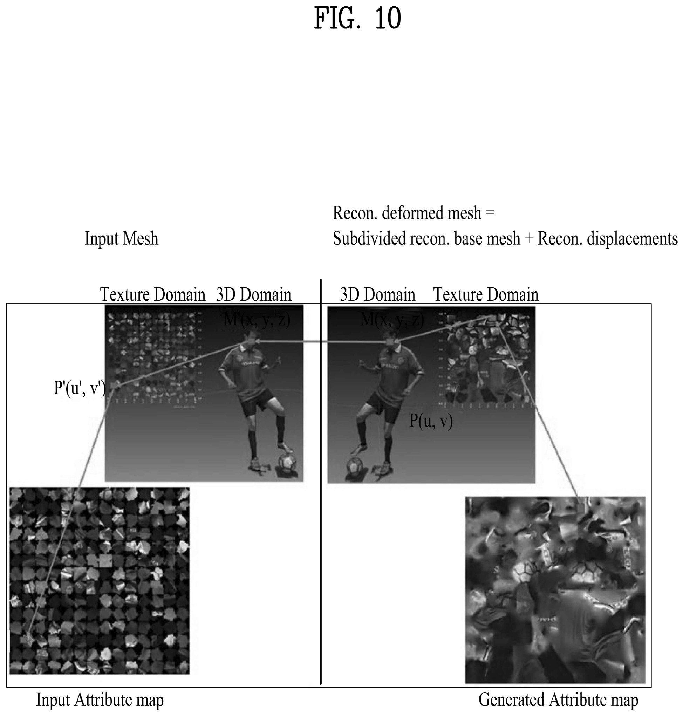

FIG. 10 illustrates an attribute transfer process in a V-MESH compression method according to embodiments.

According to embodiments, FIG. 10 illustrates a detailed operation of the attribute transfer 425 (or 525) in the encoding of FIGS. 6, 7, etc.

The encoding according to the embodiments includes attribute map encoding. According to embodiments, the attribute map encoding may be performed by the video encoder 428 of FIG. 6 or the video encoder 528 of FIG. 7.

According to embodiments, in the present disclosure, the encoder compresses information about the input mesh through base mesh encoding (i.e., intra-encoding), motion field encoding (i.e., inter-encoding), and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is re-generated through the attribute transfer process of the attribute transfer 425 (or 525).

According to embodiments, the attribute transfer 425 (or 525) first checks, for every point P(u, v) in the 2D texture domain, whether the corresponding vertex is within a texture triangle of the Recon. deformed mesh. When the corresponding vertex is in the texture triangle T, the attribute transfer calculates the barycentric coordinates ($\alpha$, $\beta$, $\gamma$) of P(u, v) according to the triangle T. Then, it calculates the 3D coordinates M(x, y, z) of P(u, v) based on the 3D vertex positions of the triangle T and ($\alpha$, $\beta$, $\gamma$). The vertex coordinates M'(x', y', z') that corresponds to the closest position to the calculated M(x, y, z) and a triangle T' containing this vertex are searched for in the input mesh domain. Then, the barycentric coordinates ($\alpha$', $\beta$', $\gamma$') of M'(x', y', z') in the triangle T' are calculated. The texture coordinates (u', v') are calculated based on the texture coordinates corresponding to the three vertices of triangle T' and ($\alpha$', $\beta$', $\gamma$'), and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm of the push-pull padding 426 (or 526).

The new attribute map generated by the attribute transfer 425 (or 525) is bundled into GoFs to construct an attribute map video, which is compressed using a video codec of the video encoder 428 (or 528).

A reference relationship between the input mesh, the input attribute map, the reconstructed deformed mesh, and the reconstructed attribute map is shown may be seen from FIG. 10.

The decoding process of FIG. 1 may perform the reverse of the encoding process of FIG. 1. Specifically, the decoding process is performed as disclosed below.

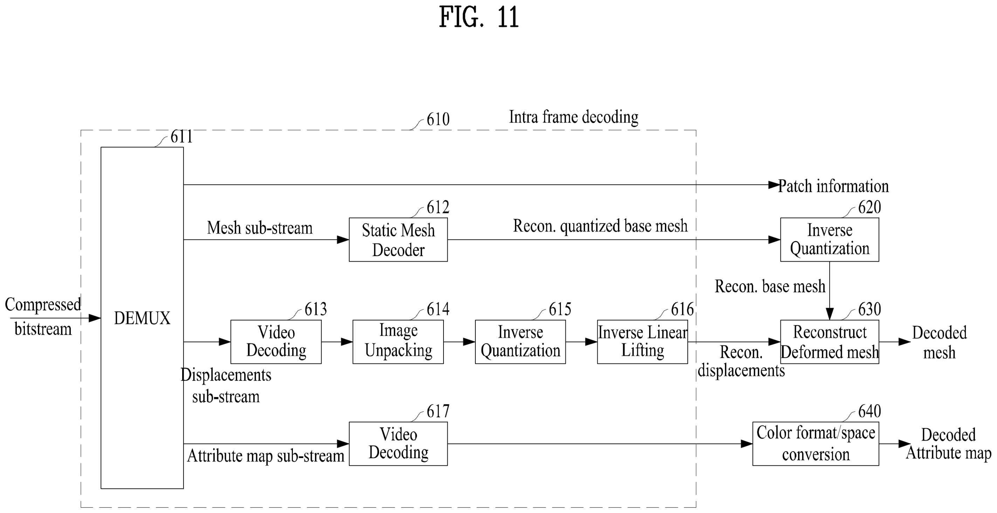

FIG. 11 shows the intra-frame decoding (or intra decoding) process of the V-Mesh technology according to embodiments.

FIG. 11 illustrates the configuration and operation of the mesh video decoder 113 of the reception apparatus of FIG. 1. Additionally, FIG. 11 illustrates that the mesh data may be reconstructed by performing a reverse process to the intra-frame encoding process of FIG. 6. Each component for the intra-frame decoding process of FIG. 11 corresponds to hardware, software, and/or a combination thereof.

First, the bitstream (i.e., compressed bitstream) received and input to the demultiplexer 611 of the intra-frame decoder 610 may be separated into a mesh sub-stream, a displacement sub-stream, an attribute map sub-stream, and a sub-stream containing patch information about the mesh, such as V-PCC/V3C. The term V-PCC (Video-based Point Cloud Compression) used in the present disclosure may have the same meaning as V3C (Visual Volumetric Video-based Coding). The two terms may be used interchangeably. Accordingly, in the present disclosure, the term V-PCC may be interpreted as V3C.

According to embodiments, the mesh sub-stream may be input to and decoded by a static mesh decoder 612, the displacement sub-stream may be input to and decoded by the video decoder 613, and the attribute map sub-stream may be input to and decoded by the video decoder 617.

According to embodiments, the mesh sub-stream may be decoded through the decoder 612 of a static mesh codec used in the encoding such as, for example, Google Draco, to reconstruct connectivity information, vertex geometry information, vertex texture coordinates, and the like related to the result of the decoding, a recon. quantized base mesh, e.g., reconstructed base mesh.

According to embodiments, the displacement sub-stream may be decoded into a displacement video through the decoder 613 of the video compression codec used in the encoding. Then, image unpacking is performed by the image unpacker 614, inverse quantization is performed by the inverse quantizer 615, and inverse transform is performed by the inverse linear lifting unit 616 to reconstruct the displacement information about each vertex (i.e., Recon. displacements).

According to embodiments, the base mesh reconstructed by the static mesh decoder 612 is inversely quantized by the inverse quantizer 620 and output to the mesh reconstructor 630. The mesh reconstructor 630 reconstructs a reconstructed deformed mesh (i.e., a decoded mesh) based on the reconstructed displacements output from the inverse linear lifting unit 616 and the reconstructed base mesh output from the inverse quantizer 620. In other words, the inversely quantized reconstructed base mesh is combined with the reconstructed displacement information to generate a final decoded mesh. In the present disclosure, the final decoded mesh is referred to as a reconstructed deformed mesh.

According to embodiments, the attribute map sub-stream is decoded by the decoder 617 corresponding to the video compression codec used in the encoding, and then a final attribute map (i.e., a decoded attribute map) is reconstructed by the color transformer 640 through color format transform, color space conversion, and the like.

According to embodiments, the reconstructed decoded mesh and decoded attribute map may be utilized at the receiving side as final mesh data that may be utilized by a user.

Referring to FIG. 11, the received compressed bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

As described above, the decoder of FIG. 11 performs intra-frame decoding as follows. The static mesh decoder 612 decodes the mesh sub-stream to generate a reconstructed quantized base mesh, and the inverse quantizer 620 applies the quantization parameters of the quantizer in reverse to generate a reconstructed base mesh. The video decoder 613 decodes the displacement sub-stream, the image unpacker 614 unpacks the image of the decoded displacement video, and the inverse quantizer 615 inversely quantizes the quantized image. The inverse linear lifting unit 616 applies a lifting transform in the reverse process of the encoder to generate a reconstructed displacement. The mesh reconstructor 630 generates a reconstructed deformed mesh based on the reconstructed base mesh and the reconstructed displacement. The video decoder 617 decodes the attribute map sub-stream, and the color transformer 640 transforms the color format and/or space of the decoded attribute map to generate a decoded attribute map.

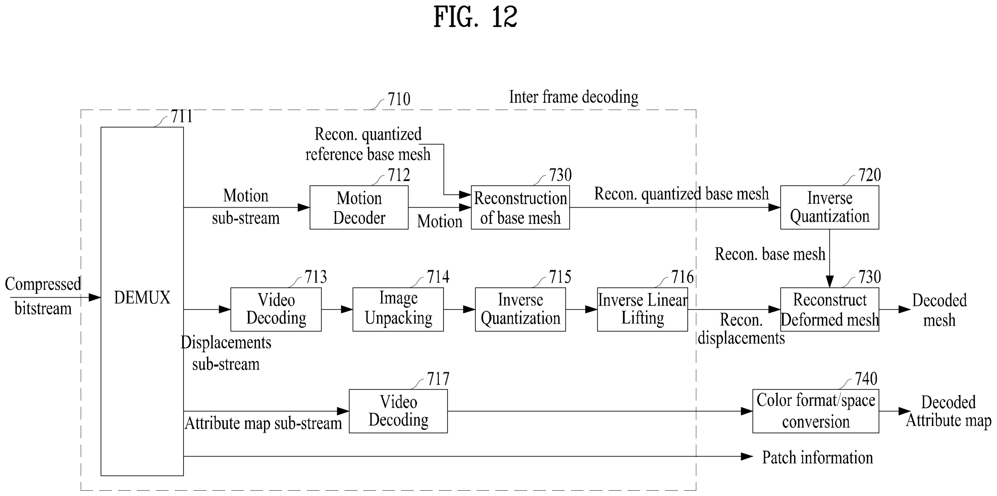

FIG. 12 illustrates an inter-frame decoding (or inter-decoding) process of V-Mesh technology.

FIG. 12 illustrates the configuration and operation of the mesh video decoder 113 of the reception apparatus of FIG. 1. In FIG. 12, mesh data may be reconstructed by performing a reverse process to the inter-frame encoding process of FIG. 7. Each component for the intra-frame decoding process of FIG. 12 corresponds to hardware, software, and/or a combination thereof.

First, the bitstream received and input to the demultiplexer 711 of the intra-frame decoder 710 may be separated into a motion sub-stream (also referred to as a motion vector sub-stream), a displacement sub-stream, an attribute map sub-stream, and a sub-stream containing patch information about the mesh, such as V3C/V-PCC.

According to embodiments, the motion sub-stream may be input to and decoded by the motion decoder 712, the displacement sub-stream may be input to and decoded by the video decoder 713, and the attribute map sub-stream may be input to and decoded by the video decoder 717.

According to embodiments, the motion sub-stream is decoded by the motion decoder 712 through entropy decoding and inverse prediction to reconstruct motion information (also referred to as motion vector information). The base mesh reconstructor 718 combines the reconstructed motion information with a pre-reconstructed and stored reference base mesh to generate a reconstructed quantized base mesh for the current frame. The inverse quantizer 720 applies inverse quantization to the reconstructed quantized base mesh to generate a reconstructed base mesh. The video decoder 713 decodes the displacement sub-stream, the image unpacker 714 unpacks the image of the decoded displacement video, and the inverse quantizer 715 inversely quantizes the quantized image. The inverse linear lifting unit 716 applies a lifting transform in the reverse process of the encoder to generate a reconstructed displacement. The mesh reconstructor 730 generates a reconstructed deformed mesh, i.e., a final decoded mesh, based on the reconstructed base mesh and the reconstructed displacement.

According to embodiments, the video decoder 717 decodes the attribute map sub-stream in the same way as the intra-decoding, and the color transformer 740 transforms the color format and/or space of the decoded attribute map to generate a decoded attribute map. The decoded mesh and decoded attribute map may be utilized at the receiving side as the final mesh data that may be utilized by the user.

Referring to FIG. 12, the bitstream contains motion information (also referred to as motion vectors), displacements, and an attribute map. The process of FIG. 12 further includes decoding the inter-frame motion information because inter-frame decoding is performed. A reconstructed base mesh is generated by decoding the motion information and generating a reconstructed quantized base mesh for the motion information based on the reference base mesh. For the operations in FIG. 12 that are the same as those in FIG. 11, refer to the description of FIG. 11.

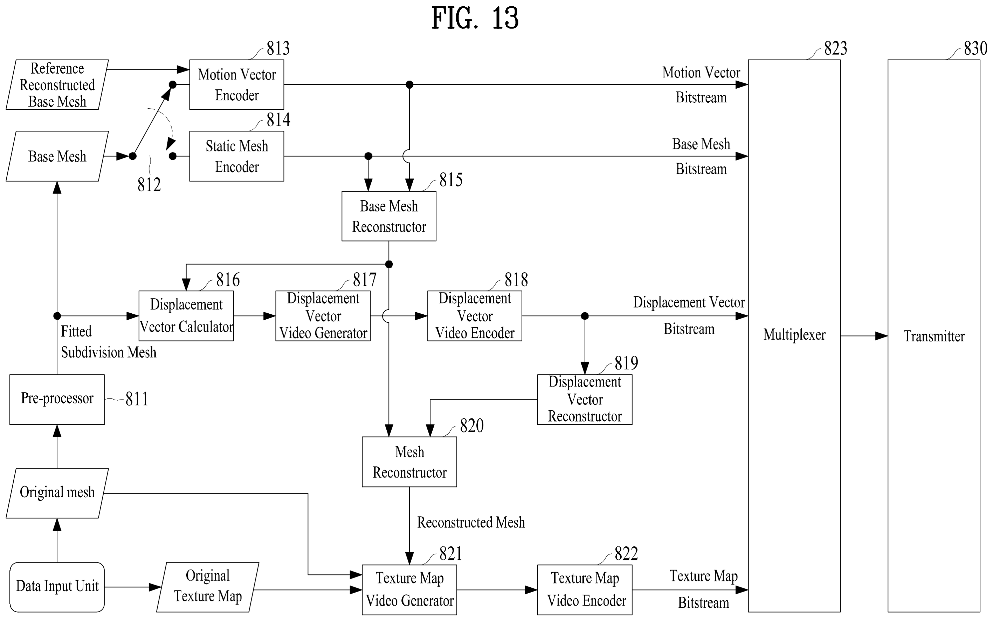

FIG. 13 illustrates a mesh data transmission apparatus according to embodiments.

FIG. 13 corresponds to the transmission apparatus 100 or mesh video encoder 102 of FIG. 1, the encoder (pre-processor and encoder) of FIG. 2, 6, or 7, and/or the corresponding transmission encoding device. Each component of FIG. 13 corresponds to hardware, software, a processor, and/or a combination thereof.

The process of operations at the transmitting end for compressing and transmitting dynamic mesh data using a V-Mesh compression technique may be configured as shown in FIG. 13. The transmission apparatus of FIG. 13 may perform intra-frame encoding (also referred to as intra-encoding or intra-picture encoding) and/or inter-frame encoding (also referred to as inter-encoding or inter-picture encoding).

The pre-processor 811 receives the original mesh and generates a decimated mesh (or base mesh) and a fitted subdivided (or subdivision) mesh. The decimation may be performed based on a target number of vertices or a target number of polygons constituting the mesh. Parameterization may be performed on the decimated mesh to generate texture coordinates and texture connectivity information per vertex. For example, the parameterization is a process of mapping a 3D curved surface into a texture domain for the decimated mesh. When the parameterization is performed using the UVAtlas tool, mapping information indicating where each vertex of the decimated mesh may be mapped to on the 2D image is generated. The mapping information is expressed and stored as texture coordinates, and the final base mesh is generated through this process. The mesh information may be quantized from a floating-point form to a fixed-point form. The result is the base mesh, which may be output to a motion vector encoder 813 or a static mesh encoder 814 through a switching unit 812. The pre-processor 811 may perform a mesh subdivision on the base mesh to generate additional vertices. Depending on the subdivision method, vertex connectivity information including the additional vertices, texture coordinates, and connectivity information about the texture coordinates may be generated. The pre-processor 811 may generate a fitted subdivided mesh by adjusting vertex positions such that the subdivided mesh becomes similar to the original mesh.

According to embodiments, when inter-frame encoding (inter-encoding) is performed on the mesh frame, the base mesh is output to the motion vector encoder 813 through the switching unit 812. When intra-frame encoding (intra-encoding) is performed on the mesh frame, the base mesh is output to the static mesh encoder 814 through the switching unit 812. The motion vector encoder 813 may be referred to as a motion encoder.

For example, when intra-encoding (intra-frame encoding) is performed on the mesh frame, the base mesh may be compressed through the static mesh encoder 814. In this case, the connectivity information, vertex geometry information, vertex texture information, normal information, and the like related to the base mesh may be encoded. The base mesh bitstream generated through the encoding is transmitted to the multiplexer 823.

As another example, when inter-encoding (inter-frame encoding) is performed on the mesh frame, the motion vector encoder 813 may receive as input a base mesh and a reference reconstructed base mesh (or a reconstructed quantized reference base mesh), compute a motion vector between the two meshes, and encode the value thereof. Further, the motion vector encoder 813 may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer 823.

The base mesh reconstructor 815 may receive the base mesh encoded by the static mesh encoder 814 or the motion vector encoded by the motion vector encoder 813, and generate a reconstructed base mesh. For example, the base mesh reconstructor 815 may perform static mesh decoding on the base mesh encoded by the static mesh encoder 814 to reconstruct the base mesh. In this case, quantization may be applied before the static mesh decoding, and inverse quantization may be applied after the static mesh decoding. In another example, the base mesh reconstructor 815 may reconstruct the base mesh based on the reconstructed quantized reference base mesh and the motion vector encoded by the motion vector encoder 813. The reconstructed base mesh is output to the displacement calculator (or displacement vector calculator) 816 and the mesh reconstructor 820.

The displacement calculator 816 may perform mesh subdivision on the reconstructed base mesh. The displacement calculator 816 may calculate a displacement vector, which is the value of the difference in vertex positions between the subdivided reconstructed base mesh and the fitted subdivision (or subdivided) mesh generated by the pre-processor 811. In this case, displacement vectors as many as vertices in the subdivided mesh may be calculated. The displacement calculator 816 may transform the displacement vectors calculated in the 3D Cartesian coordinate system to a local coordinate system based on the normal vector of each vertex.

The displacement vector video generator 817 may include a linear lifting part, a quantizer, and an image packer. That is, in displacement vector video generator 817, the linear lifting unit may transform the displacement vectors for effective encoding. According to embodiments, the transform may be lifting transform, wavelet transform, or the like. In addition, the quantizer may perform quantization on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image by the image packer. The displacement vector video generator 817 may generate a displacement vector video by grouping the packed 2D images for each frame. A displacement vector video may be generated for each group of frames (GoF) of the input mesh.

The displacement vector video encoder 818 may encode the generated displacement vector video using a video compression codec. The generated displacement vector video bitstream is transmitted to the multiplexer 823.

The displacement vector reconstructor 819 may include a video decoder, an image unpacker, an inverse quantizer, and an inverse linear lifting part. That is, in the displacement vector reconstructor 819, the encoded displacement vector is decoded by the video decoder, image unpacking is performed by the image unpacker, inverse quantization is performed by the inverse quantizer, and inverse transform is performed by the inverse linear lifting unit to reconstruct displacement vectors. The reconstructed displacement vectors are output to the mesh reconstructor 820. The mesh reconstructor 820 reconstructs a deformed mesh based on the base mesh reconstructed by the base mesh reconstructor 815 and the displacement vectors reconstructed by the displacement vector reconstructor 819. The reconstructed mesh (also referred to as the reconstructed deformed mesh) has reconstructed vertices, inter-vertex connectivity information, texture coordinates, and inter-texture coordinate connectivity information.

The texture map video generator 821 may re-generate a texture map based on the texture map (or attribute map) of the original mesh and the reconstructed deformed mesh output from the mesh reconstructor 820. According to embodiments, the texture map video generator 821 may assign the vertex-by-vertex color information in the texture map of the original mesh to the texture coordinates of the reconstructed deformed mesh. According to embodiments, the texture map video generator 821 may generate a texture map video by grouping the frame-level re-generated texture maps into GoFs.

The generated texture map video may be encoded by the texture map video encoder 822 using a video compression codec. A texture map video bitstream generated through the encoding is transmitted to the multiplexer 823.

The multiplexer 823 multiplexes the motion vector bitstream (in the case of, for example, inter-encoding), the base mesh bitstream (in the case of, for example, intra-encoding), the displacement vector bitstream, and the texture map bitstream into a single bitstream. The single bitstream may be transmitted to the receiving side through the transmitter 824. Alternatively, for the motion vector bitstream, the base mesh bitstream, the displacement vector bitstream, and the texture map bitstream, a file with one or more track data may be generated or the bitstreams may be encapsulated into segments and transmitted to the receiving side through the transmitter 824.

Referring to FIG. 13, the transmitter (encoder) may encode the mesh in an intra-frame or inter-frame manner. According to intra-encoding, the transmission apparatus may generate a base mesh, displacement vectors (or displacements), and a texture map (or attribute map). According to inter-encoding, the transmission apparatus may generate a motion vector (or motion), displacement vectors (or displacements), and a texture map (or attribute map). The texture map acquired from the data input unit is generated and encoded based on the reconstructed mesh. The displacements are generated and encoded based on the differences in vertex positions between the base mesh and the segmented (or subdivided) mesh. More specifically, the displacement is a difference in position between the fitted subdivided mesh and the subdivided reconstructed base mesh, i.e., the difference in vertex position between the two meshes. The base mesh is generated by decimating the original mesh through pre-processing and encoding the decimated mesh. For the motion, a motion vector is generated for the mesh in the current frame based on the reference base mesh in the previous frame.

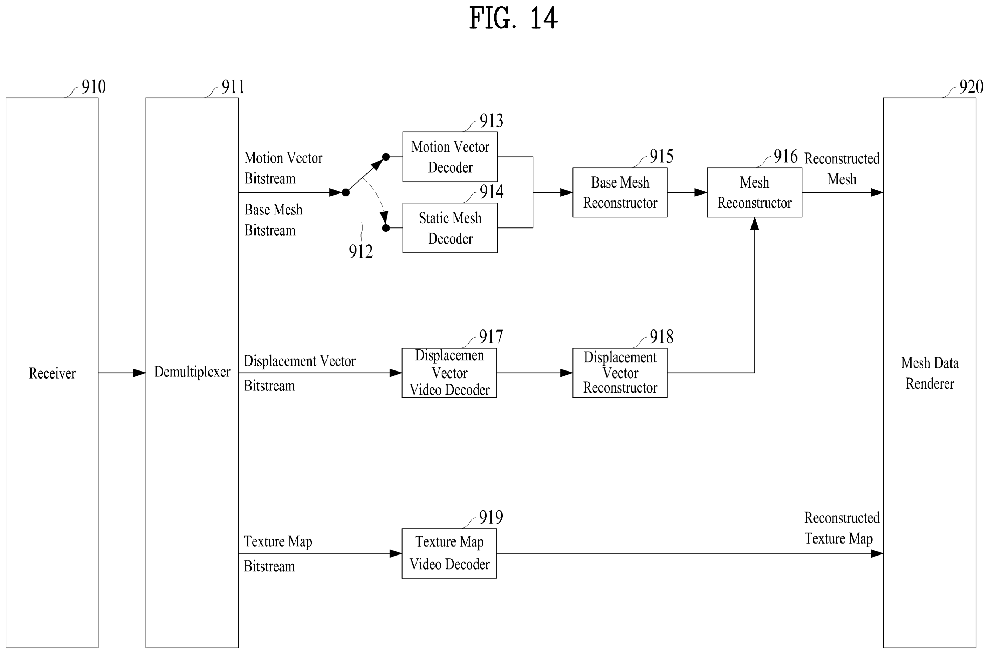

FIG. 14 illustrates a mesh data reception apparatus according to embodiments.

FIG. 14 corresponds to the reception apparatus 110 or mesh video decoder 113 of FIG. 1, the decoder of FIG. 11 or 12, and/or a corresponding reception decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of mesh data received by the receiver 910 is subjected to file/segment decapsulation and then demultiplexed by the demultiplexer 911 into a compressed motion vector bitstream (e.g., inter-decoding) or base mesh bitstream (e.g., intra-decoding), a displacement vector bitstream, and a texture map bitstream. For example, when the current mesh is inter-frame encoded (i.e., inter-encoded), the motion vector bitstream is received, demultiplexed, and then output to the motion vector decoder 913 through the switching unit 912. In another example, when the current mesh is intra-frame encoded (i.e., intra-encoded), the base mesh bitstream is received, demultiplexed, and output to the static mesh decoder 914 through the switching unit 912. Here, the motion vector decoder 913 may be referred to as a motion decoder.

According to embodiments, in the case where inter-frame encoding is applied to the current mesh based on the frame header information, the motion vector decoder 913 may decode the motion vector bitstream. According to embodiments, the motion vector decoder 913 may use the previously decoded motion vector as a predictor and add the same to the residual motion vector decoded from the bitstream to reconstruct the final motion vector.

According to embodiments, in the case where intra-frame encoding is applied to the current mesh based on the frame header information, the static mesh decoder 914 may decode the base mesh bitstream to reconstruct connectivity information, vertex geometry information, texture coordinates, normal information, and the like related to the base mesh.

According to embodiments, the base mesh reconstructor 915 may reconstruct the current base mesh based on the decoded motion vectors or the decoded base mesh. For example, in the case where inter-frame encoding is applied to the current mesh, the base mesh reconstructor 915 may add the decoded motion vectors to the reference base mesh and perform inverse quantization to generate a reconstructed base mesh. In another example, in the case where intra-frame encoding is applied to the current mesh, the base mesh reconstructor 915 may perform inverse quantization on the base mesh decoded by the static mesh decoder 914 to generate a reconstructed base mesh.

According to embodiments, the displacement vector video decoder 917 may decode the displacement vector bitstream as a video bitstream using a video codec.

According to embodiments, the displacement vector reconstructor 918 extracts displacement vector transform coefficients from the decoded displacement vector video, and applies inverse quantization and inverse transform to the extracted displacement vector transform coefficients to reconstruct displacement vectors. To this end, the displacement vector reconstructor 918 may include an image unpacker, an inverse quantizer, and an inverse linear lifting part. If the reconstructed displacement vectors are values in a local coordinate system, inverse transform to the Cartesian coordinate system may be performed.

The mesh reconstructor 916 may subdivide the reconstructed base mesh to generate additional vertices. Through the subdivision, vertex connectivity information including the additional vertices, texture coordinates, and connectivity information about the texture coordinates may be generated. In this case, the mesh reconstructor 916 may combine the subdivided reconstructed base mesh with the reconstructed displacement vectors to generate a final reconstructed mesh (also referred to as a reconstructed deformed mesh).

According to embodiments, the texture map video decoder 919 may decode the texture map bitstream as a video bitstream using a video codec to reconstruct a texture map. The reconstructed texture map has color information about each vertex in the reconstructed mesh, and the texture coordinates of each vertex may be used to obtain the color value of the vertex from the texture map.

According to embodiments, the mesh reconstructed from the mesh reconstructor 916 and the texture map reconstructed from the texture map video decoder 919 are presented to the user through a rendering process in the mesh data renderer 920.

Referring to FIG. 14, the reception apparatus (decoder) may decode the mesh in an intra-frame or inter-frame manner. According to intra-decoding, the reception apparatus may receive a base mesh, displacement vectors (or displacements), and a texture map (or attribute map), and render mesh data based on the reconstructed mesh and reconstructed texture map. According to inter-decoding, the reception apparatus may receive a motion vector (or motion), the displacement vectors (or displacements), a texture map (or attribute map), and render mesh data based on the reconstructed mesh and the reconstructed texture map.

A mesh data transmission apparatus and method according to embodiments may pre-process mesh data, encode the preprocessed mesh data, and transmit a bitstream containing the encoded mesh data. A point mesh data reception apparatus and method according to embodiments may receive a bitstream containing mesh data and decode the mesh data. The mesh data transmission/reception method/apparatus according to embodiments may be referred to as a method/apparatus according to embodiments. The mesh data transmission/reception method/apparatus may also be referred to as a 3D data transmission/reception method/apparatus or point cloud data transmission/reception method-d/apparatus.

As described above, in the V-Mesh method, the displacement information generated during the encoding process is converted into a video, which is compressed using an existing 2D video codec. In addition, the texture map (meaning the same as an attribute map) of the input mesh data is also processed into a video, which is compressed using an existing 2D video codec. In this case, the displacement video and texture map video are generated and encoded based on the user-defined resolution, and are reconstructed at the same resolution on the receiving side. However, in the case where some video bitstream data is lost due to poor network conditions on the receiving side, the entire video data may not be fully reconstructed with the current V-Mesh method. Furthermore, if the available resource level on the receiving side is not sufficient to reconstruct and utilize the transmitted mesh data, the received mesh data may not be used at all.

To address these issues, the present disclosure proposes apparatuses and methods for transmitting a bitstream by scalable encoding of mesh data to allow the data to be received up to a processable level and reconstruct the data at the maximum possible level on the receiving side. In particular, to enable the V-Mesh method to perform scalable encoding/decoding, the present disclosure proposes a scalable encoding/decoding apparatus and method for displacement video and texture map video.

That is, the present disclosure proposes a scalable mesh encoding/decoding apparatus and method that include one or more sub-bitstream sets with various resolutions and image qualities with scalability applied. In other words, the present disclosure proposes apparatuses and methods which are capable of reflecting scalability for displacement video and texture map video that are compressed using a conventional 2D video codec in the V-Mesh method.

More specifically, the present disclosure proposes a method for frame packing of quantized displacement vector transform coefficients for scalable displacement coding. It also proposes a method of setting a target LoD for the displacement part and the texture map part in the current standard video-based mesh coding. The present disclosure also proposes a method of skipping encoding of transform coefficients in performing transmission when all quantized displacement vector transform coefficients form a zero-vector.

Therefore, the present disclosure supports scalable encoding/decoding for dynamic mesh data, allowing mesh data with optimal resolution and quality to be selectively reconstructed and provided by a user or system according to the user's receiving environment.

The present disclosure relates to V-DMC, a method of compressing 3D dynamic mesh data based on conventional 2D video codecs, and more particularly, to a method of splitting displacement and attribute (texture) information into layers and compressing the same by a V-Mesh encoder, and an apparatus and method for encoding displacement information by applying an encoding method that is not in the 2D video form, such that scalable structures may be supported. The present disclosure also relates to a method of decoding displacement information and texture map information up to a target level or layer by a reception apparatus, and an apparatus and method for decoding mesh data up to the target level (layer) using the decoding method.

In the present disclosure, geometry information (or geometry or geometry data), which is one of the elements that constitute a mesh, includes vertices (or points), edges, and polygons. Here, a vertex defines a position in 3D space, an edge represents connectivity between vertices, and a polygon, formed by a combination of edges and vertices, defines the surface of the mesh. In other words, each vertex that constitutes the mesh represents a position in 3D space, expressed by, for example, X, Y, and Z coordinates. The polygon may be a triangle or a rectangle. In other words, geometry forms the skeleton of a 3D model, defining the shape of a model, and is visually represented when rendered.

In the present disclosure, the terms vertex and point may be used interchangeably. Vertices have coordinates in 3D space, and a polygon such as a triangle or a quadrilateral may be generated by connecting multiple vertices.

The displacement information may be acquired based on subdivided meshes (or sub-meshes). That is, the difference in position of each vertex between a fitted subdivision mesh and a subdivided reconstructed base mesh is calculated, wherein the fitted subdivided mesh is generated by performing a fitting procedure to make the input mesh and sub-mesh similar to each other, and the subdivided reconstructed base mesh is generated by subdividing the reconstructed base mesh. In the present disclosure, the difference in vertex position is referred to as a displacement vector. In the term displacement vector is used interchangeably with displacement or displacement information. Also, the terms displacement video may be used interchangeably with displacement vector video or displacement vector transform coefficient video, and the term displacement vector may be used interchangeably with displacement vector transform coefficients.

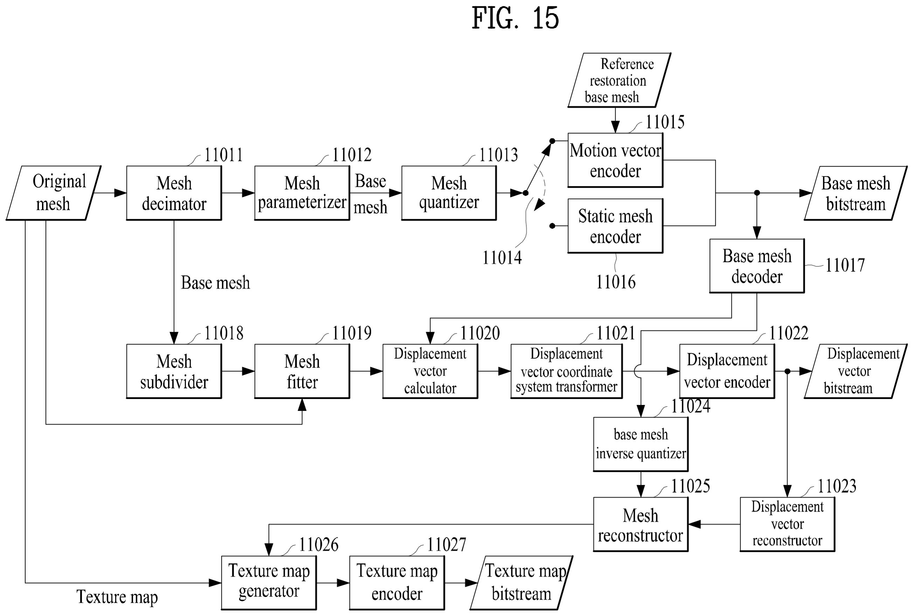

FIG. 15 illustrates a transmission apparatus according to the embodiments. The transmission apparatus of FIG. 15 may be referred to as a mesh data transmission apparatus, an encoder, an encoder of a transmission apparatus, a V-Mesh encoder, or a dynamic mesh encoder.

FIG. 15 corresponds to the transmission device 100 or mesh video encoder 102 of FIG. 1, the encoder (pre-processor and encoder) of FIG. 2, 6, or 7, the transmission apparatus of FIG. 13, and/or the corresponding transmission encoding apparatus. Each component of FIG. 15 corresponds to hardware, software, a processor, and/or a combination thereof. In FIG. 15, the order in which the blocks are executed may be changed. Some blocks may be omitted, and some blocks may be newly added.

In the present disclosure, the transmitting operation process for compression and transmission of dynamic mesh data using the V-Mesh compression technique may be performed as illustrated in FIG. 15. The transmission apparatus of FIG. 15 may support both an intra-frame encoding (or intra encoding or intra-screen encoding) process and/or an inter-frame encoding (or inter encoding or inter-screen encoding) process.

In FIG. 15, the mesh decimator 11011 simplifies the input original mesh using a mesh simplification algorithm to generate a base mesh (also referred to as a simplified base mesh or simplified mesh). The mesh simplification may be performed based on the number of target vertices or the number of target polygons constituting the mesh. For example, decimation or the like may be used as a mesh simplification algorithm for simplifying the original mesh. Specifically, the decimation may be a process of selecting vertices to be removed from the original mesh based on a certain reference point, and then removing the selected vertices and triangles connected to the selected vertices.

In other words, the mesh decimator 11011 may simplify the input mesh to a target number of vertices or a target number of faces. The simplification may be performed using various methods, such as triangle collapse and edge collapse.

According to embodiments, the base mesh simplified by the mesh decimator 11011 is provided to the mesh parameterizer 11012 and the mesh subdivider 11018.

The mesh parameterizer 11012 performs an operation of mapping a 3D surface to a texture domain for the decimated mesh. That is, the mesh parameterizer 11012 generates texture coordinate information and texture connectivity information related to the input mesh. In one embodiment, the mesh parameterizer 11012 may perform parameterization using a UV Atlas tool. In this operation, mapping information indicating a position to which each vertex of the decimated mesh may be mapped to in the 2D image is generated. The mapping information is expressed and stored as texture coordinates, and the final base mesh is generated through this operation. In other words, the mesh parameterizer 11012 performs parameterization to generate texture coordinates (UV coordinates) and texture connectivity information per vertex of the input mesh (i.e., the decimated mesh or decimated base mesh).

The final base mesh (also referred to as a base mesh with a texture map) generated by the parameterizer 11012 is input to the mesh quantizer 11013 to be quantized. According to embodiments, the mesh quantizer 11013 may quantize the mesh information (e.g., geometry information (x, y, z) and/or texture coordinates (u,v), normal information (nx, ny, nz), etc.) in floating point form to fixed-point form. That is, the mesh quantizer 11013 may quantize the vertex coordinates and texture coordinates of the base mesh. In some embodiments, quantization of a specific component may be skipped.

The mesh subdivider 11018 subdivides the base mesh obtained through decimation by the mesh decimator 11011. The mesh subdivider 11018 may perform mesh subdivision on the base mesh to generate additional vertices. Depending on the subdivision method, vertex connectivity information including the additional vertices, texture coordinates, and connectivity information about the texture coordinates may be generated. In this case, the geometry information connectivity information, texture coordinate connectivity information, and texture coordinates may be generated through implicit derivation depending on the subdivision method. According to embodiments, the mesh subdivider 11018 may perform the subdivision using a method such as mid-edge, Loop, or Catmul&Clark.

According to embodiments, a mesh fitter 11019 may perform fitting by adjusting the vertex positions such that the subdivided mesh from the mesh subdivider 1101 becomes similar to the original mesh, thereby generating a fitted subdivided mesh.

In the present disclosure, the combination of the mesh decimator 11011, the mesh parameterizer 11012, the mesh subdivider 11018, and the mesh fitter 11019 may be referred to as a pre-processor. According to embodiments, the pre-processor may further include a displacement vector calculator 11020.

According to embodiments, the base mesh quantized by the mesh quantizer 11013 may be output to a motion vector encoder 11015 or a static mesh encoder 11016 through a switching part 11014.

According to embodiments, when inter-frame encoding (inter encoding) is performed on the mesh frame, the base mesh is output to the motion vector encoder 11015 through the switching part 11014. When intra-frame encoding (intra encoding) is performed on the mesh frame, the base mesh is output to the static mesh encoder 11016 through the switching part 11014. The motion vector encoder 11015 may be referred to as a motion encoder.

In one example, when intra encoding (intra-frame encoding) is performed on the mesh frame, the base mesh may be compressed by the static mesh encoder 11016. In this case, the connectivity information, vertex geometry information, vertex texture information, normal information, and the like related to the base mesh may be encoded. That is, vertex coordinates, vertex connectivity information, texture coordinates, texture connectivity information, and the like related to the mesh may be encoded by the static mesh encoder 11016. The base mesh bitstream generated through the encoding is transmitted to the multiplexer (not shown).

In another example, when inter encoding (inter-frame encoding) is performed on the mesh frame, the motion vector encoder 11015 may receive a base mesh and a reference reconstructed base mesh (or a reconstructed quantized reference base mesh) as input, calculate a motion vector between the two meshes, and encode the value thereof. Further, the motion vector encoder 11015 may perform connectivity information-based prediction using the previously encoded/-decoded motion vector as a predictor, and perform entropy encoding on a motion vector difference (also referred to as a residual motion vector), which is obtained by subtracting the predicted motion vector from the current motion vector. The motion vector bitstream generated through the encoding is transmitted as the base mesh bitstream to the multiplexer (not shown). That is, in the case of intra-frame encoding, the static mesh bitstream is input to the multiplexer as the base mesh bitstream.

In FIG. 15, the base mesh decoder 11017 may receive the base mesh encoded by the static mesh encoder 11016 or the motion vectors encoded by the motion vector encoder 11015, and generate a reconstructed base mesh. The base mesh decoder 11017 reconstructs the base mesh based on the encoding type of the current mesh (inter-frame encoding or intra-frame encoding). For example, the base mesh decoder 11017 may reconstruct the base mesh by performing static mesh decoding on the base mesh encoded by the static mesh encoder 11016. In this case, quantization may be applied before the static mesh decoding, and inverse quantization may be applied after the static mesh decoding. In other words, when intra-frame encoding is performed, inverse quantization may be performed on the base mesh quantized by the mesh quantizer 11013 to reconstruct the current base mesh. As another example, the base mesh decoder 11017 may reconstruct the base mesh based on the reconstructed quantized reference base mesh and the motion vectors encoded by the motion vector encoder 11015. In other words, when inter-frame encoding is performed, motion vectors may be decoded using a motion vector decoding method, and then the decoded motion vectors may be applied (i.e., added) to the reference reconstructed base mesh to generate the current base mesh. In the case where the motion vectors have not been quantized, the motion vector reconstruction process may be skipped, and the motion vectors calculated by the motion vector encoder 11015 may be used to reconstruct the current base mesh. The reconstructed base mesh is output to the displacement vector calculator 11020 and the mesh inverse quantizer 11024.

According to embodiments, the displacement vector calculator 11020 may perform mesh subdivision on the reconstructed base mesh. Further, the displacement vector calculator 11020 may calculate a displacement vector, which is the value of the difference in vertex position between the subdivided reconstructed base mesh and the fitted subdivision (or subdivided) mesh generated by the mesh fitter 11019. In this case, the displacement vectors may be calculated as many times as the number of vertices in the subdivided mesh. In other words, the displacement vectors corresponding to the number of vertices in the subdivided mesh may be calculated by the displacement vector calculator 11020.

According to embodiments, the displacement vector coordinate transformer 11021 may transform the vertex displacement vectors calculated in a 3D Cartesian coordinate system (i.e., (x, y, z) space) to a local coordinate system (i.e., a normal, tangential, bi-tangential coordinate system) based on the normal vector of each vertex. Here, the normal vector may be calculated for each subdivided vertex based on the geometry information and connectivity information about neighboring vertices.

According to embodiments, the displacement vector coordinate transformer 11021 or the displacement vector encoder 11022 may include a displacement vector transformer and/or a displacement vector quantizer. In other embodiments, the displacement vector transformer and/or the displacement vector quantizer may be configured as separate components/modules.

According to embodiments, the displacement vector transformer may perform a transformation on the displacement vector in the (x, y, z) or (n, t, bt) coordinate system. According to embodiments, lifting transform, wavelet transform, or the like may be applied for the transformation. In the (n, t, bt) coordinate system, n denotes normal, t denotes tangential, and bt denotes bi-tangential.

For example, when lifting transform is performed to predict vertex $R_k$ of the k-th subdivision level, the subdivided vertex displacement vector of $R_t$ (where t<k or t<=k) may be used as a predictor for displacement vector prediction at the k-th subdivision level. In some embodiments, the displacement vector may be predicted based on an average or distance-based weighted average of the n nearest points based on connectivity information among the vertices at a lower subdivision level than the current vertex. In some embodiments, the prediction may be performed based on the displacement vectors of the n vertices that are used to generate the current vertex in the mesh subdivision operation.

Then, when lifting transform is performed, the residual signal generated by the prediction may be used to update the displacement vectors of the vertices used in the prediction.

According to embodiments, the displacement vector quantizer may quantize the displacement vector values, that is, the displacement vectors or displacement vector transform coefficients transformed by the displacement vector transformer.

According to embodiments, the displacement vector encoder 11022 may encode the displacement vectors or displacement vector transform coefficients output from the displacement vector quantizer. In the present disclosure, the displacement vector encoder 11022 may perform encoding using a video codec-based encoder, a zero run-length encoder, an arithmetic encoder, or the like. For example, when the encoding method is video codec-based encoding, the displacement vector encoder 11022 may pack the displacement vectors or displacement vector transform coefficients into a frame for encoding. That is, the displacement vector transform coefficients may be packed into a 2D image and may then be encoded using a 2D video codec (i.e., a video compression codec), zero run-length encoding, or arithmetic encoding to generate a displacement vector video bitstream. A detailed description of packing of the displacement vector transform coefficients into a frame for encoding by the displacement vector encoder 11022 will be provided later.

According to embodiments, the displacement vector video bitstream generated through encoding by the displacement vector encoder 11022 is transmitted to the multiplexer (not shown). According to embodiments, regarding the method of selecting encoding by the displacement vector encoder 11022, a displacement vector encoder agreed upon by the encoder (i.e., transmitting side)/decoder (i.e., receiving side) may be used, or the encoder on the transmitting side may transmit, to the decoder on the receiving side, the type of displacement vector encoder selected by analyzing the characteristics of the displacement vectors.

According to embodiments, the displacement vector reconstructor 11023 may reconstruct the displacement vectors by performing the inverse process of the displacement vector encoding on the displacement vectors or displacement vector transform coefficients encoded by the displacement vector encoder 11022. That is, the displacement vector reconstructor 11023 may unpack the displacement vectors according to the encoding method, for example, when the displacement vectors have been encoded based on a video codec. Also, the displacement vector reconstructor 11023 may further perform inverse quantization, inverse transformation, or other operations depending on whether quantization and transformation have been performed during the displacement vector encoding process.

According to embodiments, the mesh inverse quantizer 11024 may perform inverse quantization on the vertex coordinates or texture coordinates of the reconstructed base mesh through the inverse process of quantization. In the case where the quantization by the mesh quantizer 11013 is skipped, the inverse quantization by the mesh inverse quantizer 11024 is also skipped.

According to embodiments, the mesh reconstructor 11025 may reconstruct a mesh based on the reconstructed displacement vectors output from the displacement vector reconstructor 11023 and the reconstructed base mesh (or inverse-quantized reconstructed base mesh) output from the mesh inverse quantizer 11024. More specifically, the mesh reconstructor 11025 may subdivide the reconstructed base mesh output from the mesh inverse quantizer 11024 and add the reconstructed displacement vectors from the displacement vector reconstructor 11023 to the subdivided base mesh to generate a reconstructed deformed mesh. According to embodiments, the mesh reconstructed by the mesh reconstructor 11025 (also referred to as the reconstructed mesh or reconstructed deformed mesh) includes reconstructed vertices, inter-vertex connectivity information, texture coordinates, and connectivity information about the texture coordinates. The reconstructed mesh (or reconstructed deformed mesh) generated by the mesh reconstructor 11025 is provided to the texture map generator 11026.

According to embodiments, the texture map generator 11026 may regenerate the texture map of the current mesh based on the texture map (also referred to as an attribute map) of the original mesh and the reconstructed mesh from the mesh reconstructor 11025. That is, the texture map generator 11026 may generate a texture map of the reconstructed mesh based on the texture map of the original mesh and the relationship between the original mesh and the reconstructed mesh.

According to embodiments, the texture map generator 11026 may assign per-vertex color information included in the texture map of the original mesh to the texture coordinates of the reconstructed base mesh (or reconstructed deformed mesh). According to embodiments, the texture map generator 11026 may group the regenerated texture maps for each frame into GoFs to generate a texture map (or texture map video).

The texture map generated by the texture map generator 11026 may be encoded by the texture map encoder 11027. For example, the texture map encoder 11027 may encode the texture map using a 2D video codec-based encoder, a zero run-length encoder, or an entropy coding-based arithmetic encoder. Additionally, the texture map encoder 11027 may perform color space conversion on the texture map. The texture map substreams (or texture map video bitstreams) generated through texture map encoding are transmitted to the multiplexer (not shown).

According to embodiments, types of the texture map encoder 11027 may include a video encoder (e.g., VVC, HEVC) and an entropy coding-based encoder. As a method of selecting the texture map encoder 11027, a texture map encoder agreed upon by the encoder (i.e., the transmitting side)/decoder (i.e., the receiving side) may be used, or the type of texture map encoder selected by the encoder on the transmitting side may be transmitted to the decoder on the receiving side.

According to embodiments, the multiplexer (not shown) may multiplex the input base mesh bitstream, displacement vector bitstream, and texture map bitstream into a single bitstream and transmit the multiplexed bitstream to the reception apparatus. Alternatively, the base mesh bitstream, displacement vector bitstream, and texture map bitstream may be encapsulated into a file/segment and transmitted to the reception apparatus.

According to embodiments, the bitstreams multiplexed by the multiplexer may be transmitted over a network and/or stored on a digital storage medium. The network may include a broadcast network and/or a communication network, and the digital storage medium may include various storage media, such as USB, SD, CD, DVD, Blu-ray, HDD, and SSD.

Next, the process of packing displacement vectors or displacement vector transform coefficients into a frame for encoding by the displacement vector encoder 11022 is described below.

The displacement vector encoder 11022 may perform transformation and quantization on the displacement vectors. The displacement vector encoder 11022 may encode the displacement vectors or quantized displacement vector transform coefficients using a 2D video codec-based method, and/or zero run-length encoding, and/or arithmetic encoding. The displacement vector encoder 11022 may selectively use only one of the 2D video codec-based method, the zero run-length encoding, and the arithmetic encoding or use one or more combinations to encode the displacement vectors or quantized displacement vector transform coefficients.

According to embodiments, the displacement vector encoder 11022 may encode the displacement vectors or displacement vector transform coefficients on a per-level or per-LoD basis. In one embodiment of the present disclosure, the displacement vectors or displacement vector transform coefficients may be encoded on a per-level basis. Here, a level may refer to a subdivision level or an LoD level.

In the present disclosure, levels and LoDs may be defined during the subdivision of the base mesh, as described in FIG. 8. In this case, according to one embodiment, the subdivision of the base mesh may be performed by the mesh subdivider 11018. According to one embodiment, the mesh subdivider 11018 may be included in the pre-processor of FIG. 2, 3, 6, 7, 13, or 15.

More specifically, mesh subdivision may be performed by the mesh subdivider 11018 n times based on user parameters or an agreement between the encoder (i.e., the transmission apparatus) and decoder (i.e., the reception apparatus). According to embodiments, the vertices of the base mesh may be defined as the vertices of level 0 ($R_0$), the vertices newly generated by performing the subdivision once as the vertices of level 1 ($R_1$),..., and the vertices newly generated by performing the subdivision n times as the vertices of level n ($R_n$). For simplicity, the vertices of level 0 ($R_0$) may be referred to as level 0 vertices, the vertices of level 1 ($R_1$) as level 1 vertices,..., and the vertices of level n ($R_n$) as level n vertices. Also, level 0 may be referred to as the 0-th level ($R_0$), level 1 as the first level ($R_1$),..., and level n as the n-th level ($R_n$).

According to embodiments, LoD0, LoD1,..., LoDn may be defined as shown in Equation 1 below.

[Equation 1]

$$LoD0 = R_0$$
$$LoD1 = R_0 + R_1 = LoD0 + R_1$$
$$\ldots$$
$$LoDn = R_0 + R_1 +, \ldots, + R_n = LoDn\text{-}1 + R_t$$

That is, the base mesh includes vertices for LoD0. The first subdivision mesh, generated by subdividing the base mesh once, includes vertices for LoD1. In other words, LoD1 includes the vertices of the base mesh (i.e., $R_0$ vertices) and the newly generated level 1 vertices (i.e., $R_1$ vertices) generated by subdividing the base mesh. Further, the second subdivision mesh, generated by subdividing the first subdivision mesh, includes vertices for LoD2. That is, LoD2 includes the vertices of the base mesh (i.e., $R_0$ vertices), the level 1 vertices (i.e., $R_1$ vertices) newly generated by subdividing the base mesh, and the level 2 vertices (i.e., $R_2$ vertices) newly generated by subdividing the first subdivision mesh.

In this way, LoDs represent the level of detail of the mesh data content. As the index of the LoD (or level) increases, the distance between vertices decreases, and the level of detail increases. That is, the detail in the mesh data content is lowered as the value of the LoD decreases, whereas the detail in the mesh data content is enhanced as the value of the LoD increases.

According to embodiments, the displacement vectors may be calculated per level or per LoD by the displacement vector calculator 11020. For example, when displacement vectors are calculated per level, displacement vectors as the number of vertices of the base mesh may be calculated for level 0 ($R_0$). For level 1 ($R_1$), displacement vectors as the number of vertices newly generated in the first subdivision mesh may be calculated. For level 2 ($R_2$), displacement vectors as the number of vertices newly generated in the second subdivision mesh may be calculated. The same applies to the other levels. For simplicity, in the present disclosure, the displacement vectors or displacement vector transform coefficients for level 0 ($R_0$) are referred to as disp$_{R0}$, the displacement vectors or displacement vector transform coefficients for level 1 ($R_1$) as disp$_{R1}$, and the displacement vectors or displacement vector transform coefficients for level 2 ($R_2$) as disp$_{R2}$. In the present disclosure, the term "displacement vector transform coefficient" may be used interchangeably with "transform coefficient."

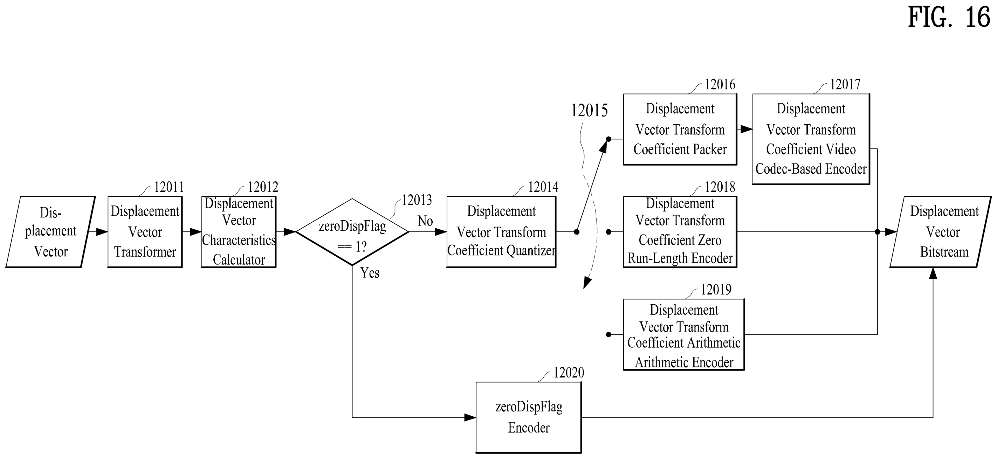

FIG. 16 is a detailed block diagram of the displacement vector encoder 11022 according to embodiments. In the present disclosure, the displacement vector encoder 11022 may be referred to as a displacement vector transform coefficient encoder. Each component of FIG. 16 corresponds to hardware, software, a processor, or a combination thereof. The order in which the blocks of FIG. 16 are executed may be changed. Some blocks may be omitted, and some blocks may be newly added.

According to embodiments, the displacement vector encoder 11022 may include a displacement vector transformer 12011, a displacement vector characteristics calculator 12012, a determiner 12013, a displacement vector transform coefficient quantizer 12014, a switching part 12015, a displacement vector transform coefficient packer 12016, a displacement vector transform coefficient video codec-based encoder 12017, a displacement vector transform coefficient zero run-length encoder 12018, a displacement vector transform coefficient arithmetic encoder 12019, and a flag information encoder 12020.

In one embodiment, the displacement vector encoder 11022 of FIG. 16 may encode the displacement vectors or displacement vector transform coefficients per level, or skip (or omit) the encoding. That is, the displacement vector transformer 12011 receives displacement vectors per level as input.

For simplicity, the present disclosure describes level L, i.e., the L-th level ($R_L$), as an embodiment. This is merely one embodiment, and the same process applies to all levels.

The displacement vector transformer 12011 transforms the displacement vectors of the L-th level ($R_L$) to generate displacement vector transform coefficients.

The displacement vector characteristics calculator 12012 calculates characteristics of the values of the displacement vector transform coefficients of the L-th level ($R_L$).

According to embodiments, the displacement vector characteristics calculator 12012 may calculate the total number corresponding to the cases where the values of the displacement vector transform coefficients of the L-th level ($R_L$) are not zero vectors.

In one embodiment of the present disclosure, when all values of the displacement vector transform coefficients of the L-th level ($R_L$) are zero vectors, 1-bit flag information, i.e., zeroDispFlag, may be set to 1. In another embodiment, even when some of the values of the displacement vector transform coefficients of the L-th level ($R_L$) are zero vectors, zeroDispFlag may be set to 1.

According to embodiments, the determiner 12013 checks whether the value of zeroDispFlag is 1. When the value is not 1, the displacement vector transform coefficients of the L-th level ($R_L$) are provided to the displacement vector transform coefficient quantizer 12014.

According to embodiments, when the value of zeroDispFlag is 1, the determiner 12013 does not provide the displacement vector transform coefficients of the L-th level ($R_L$) to the displacement vector transform coefficient quantizer 12014, such that encoding of the displacement vector transform coefficients is skipped (omitted).

According to embodiments, the flag information encoder 12020 transmits the 1-bit flag information (zeroDispFlag) when the determiner 12013 determines that the value of zeroDispFlag is 1. In this operation, the 1-bit flag information may be included in the displacement vector bitstream to be transmitted or may be included in signaling information to be transmitted. That is, once the determiner 12013 determines that the value of zeroDispFlag for the L-th level ($R_L$) is 1, the encoding of the displacement vector transform coefficients of the L-th level ($R_L$) is omitted (or skipped), and zeroDispFlag set to 1 is transmitted such that the skip (omission) may be identified by the decoder of the reception apparatus.

In this way, according to the present disclosure, when all or some of the displacement vector transform coefficients of the L-th level ($R_L$) are zero vectors, 1-bit flag information may be transmitted, and the encoding of the displacement vector transform coefficients of the level (e.g., the L-th level ($R_L$)) may be omitted.

According to embodiments, the 1-bit flag information (zeroDispFlag) may be transmitted for each level, or may be transmitted only for a specific level (e.g., L=numLoD-1, where numLoD is the total number of LoDs) according to an agreement between the encoder of the transmission apparatus/the decoder of the reception apparatus such that whether packing and/or encoding is to be skipped may be determined. For example, in one embodiment, for the displacement vector transform coefficients of a level for which the encoding is skipped the packing operation may be skipped, and whether packing is skipped may be determined based on the 1-bit flag information (zeroDispFlag).

According to embodiments, the displacement vector transform coefficient quantizer 12014 may quantize the input displacement vector transform coefficients. In this case, different quantization parameters may be applied for the respective axes of the displacement vector transform coefficients. The quantization parameters may be derived according to an agreement between the encoder and the decoder. In the present disclosure, the quantization operation may be skipped. When the quantization operation is skipped, the inverse quantization operation may also be skipped by the decoder of the reception apparatus.

According to embodiments, the displacement vector transform coefficients quantized by the displacement vector transform coefficient quantizer 12014 or the displacement vector transform coefficients for which quantization is skipped may be provided to the displacement vector transform coefficient packer 12016, the displacement vector transform coefficient zero run-length encoder 12018, or the displacement vector transform coefficient arithmetic encoder 12019 via the switching part 12015.

In the present disclosure, the displacement vector transform coefficients may be encoded using any one of the video codec-based encoding method, zero run-length encoding method, and arithmetic encoding method or a combination of one or more thereof. Further, the encoding of the displacement vector transform coefficients according to embodiments is not limited to the examples described above.

In one embodiment of the present disclosure, the displacement vector transform coefficients may be encoded using one of the video codec-based encoding method, zero run-length encoding method, and arithmetic encoding method to generate a displacement vector bitstream.

According to embodiments, the transform coefficient encoder may be selected via the switching part 12015 according to an agreement between the encoder (i.e., the transmitting side) and the decoder (i.e., the receiving side). Alternatively the encoder on the transmitting side may analyze the characteristics of the displacement vector transform coefficients, select the transform coefficient encoder via the switching part 12015 based on the result of the analysis, and then transmit the type of the selected transform coefficient encoder to the decoder on the receiving side.

According to embodiments, to encode the displacement vector transform coefficients using the video codec-based encoding method, the displacement vector transform coefficient packer 12016 first performs the operation of packing the displacement vector transform coefficients into a frame as a 2D image. That is, the displacement vector transform coefficient packer 12016 may pack the displacement vector transform coefficients into a 2D image, and the displacement vector transform coefficient video codec-based encoder 12017 may encode the packed 2D images using a video compression codec.

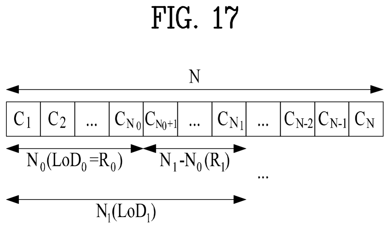

FIG. 17 illustrates an example of the structure of displacement vector transform coefficients according to embodiments. In FIG. 17, assuming that the total number of displacement vector transform coefficients is N, the number of displacement vector transform coefficients included in LoD0 is N0 (LoD0=$R_0$), and the number of displacement vector transform coefficients included in LoD1 is N1 (LoD1), the number of displacement vector transform coefficients of level 0 ($R_0$) is N0, and the number of displacement vector transform coefficients at level 1 ($R_1$) is N1-N0. That is, the number of displacement vector transform coefficients included in LoD1 (N1) is the sum of the number of displacement vector transform coefficients of level 0 ($R_0$) (N0) and the number of displacement vector transform coefficients of level 1 ($R_1$) (N1-N0).

According to embodiments, the displacement vector transform coefficient packer 12016 may pack N displacement vector transform coefficients (e.g., N quantized displacement vector transform coefficients) into a W×H sized image. Here, W×H may be the size of the frame into which the displacement vector transform coefficients are packed as a 2D image.

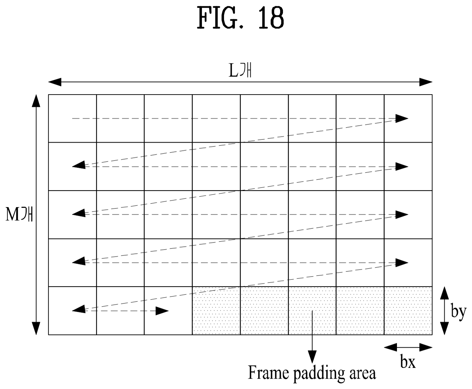

FIG. 18 illustrates an example of packing of displacement vector transform coefficients according to embodiments. That is, the displacement vector transform coefficients in the 1D form as shown in FIG. 17 may be packed into a 2D image as shown in FIG. 18.

According to embodiments, the displacement vector transform coefficient packer 12016 may configure bx×by sized blocks from the 1D vectors or scalar displacement vector transform coefficients (also referred to as transform coefficient levels) and pack the respective blocks according to a scanning order agreed upon by the encoder/decoder, such as z-scan order, zig-zag scanning order, or 2D Morton code order. That is, the L×M displacement vector transform coefficient blocks may be block-packed into an image of size (bx*L)×(by*M) according to the order defined by the encoder/decoder. Here, L×M may be the number of blocks of size bx*by, and bx and by may each be 16. That is, every 256 (16*16) displacement vector transform coefficients may constitute one block, and the blocks may be packed according to a z-scan order or zig-zag scan order. In other words, in a block, the transform coefficients may be packed according to a z-scan order, zig-zag scanning order, or 2D Morton code order.

If displacement vector transform coefficients of all levels are packed into one frame as a 2D image, packing may be sequentially performed starting from the displacement vector transform coefficient blocks of level 0 ($R_0$) according to the scanning order. In the case where the total size of the displacement vector transform coefficients is smaller than L×M, padding is performed as shown in FIG. 18 such that the image becomes of size (bx*L) ×(by*M). That is, when the total number of transform coefficients is smaller than (bx*L)×(by*M), padding may be performed such that the displacement vector image may become of size (bx*L)×(by*M). FIG. 18 illustrates an example in which padding is performed on five blocks. Here, padding means filling the block with an ameaningless value (e.g., 0). In another example, when displacement vector transform coefficients of multiple levels are packed into a single frame as a 2D image, packing may be sequentially performed starting from the blocks of a lower level according to the scanning order.

According to embodiments, L and M may be determined according to the number of displacement vector transform coefficients (N). Alternatively, after defining L (or M) according to an agreement between the encoder/decoder, M (or L) may be derived according to the number of displacement vector transform coefficients (N) as in Equation 2 below. Equation 2 is an example of deriving M when L is defined according to an agreement between the encoder/decoder.

[Equation 2]

$$blockNum = round(\frac{N+bx*by-1}{bx*by})$$

$$M = round((blockNu+L-1)/L)$$

In Equation 2, the round function rounds the number inside the parentheses to the nearest integer.

According to embodiments, the method of packing displacement vector transform coefficients by the displacement vector transform coefficient packer 12016 may be determined by the encoder/decoder according to an agreement, or the packing method performed by the displacement vector transform coefficient packer 12016 may be transmitted to the decoder of the reception apparatus.

According to embodiments, the displacement vector transform coefficients of all levels may be packed into a single image (i.e., a single frame) and may be encoded by the displacement vector transform coefficient video codec-based encoder (12017). Alternatively, the displacement vector transform coefficients of the respective subdivision levels (R) may be packed into separate images (i.e., separate frames) and encoded individually. Alternatively, displacement vector transform coefficients of a specific level may be packed into one image, while displacement vector transform coefficients of two or more other levels may be packed into another image.

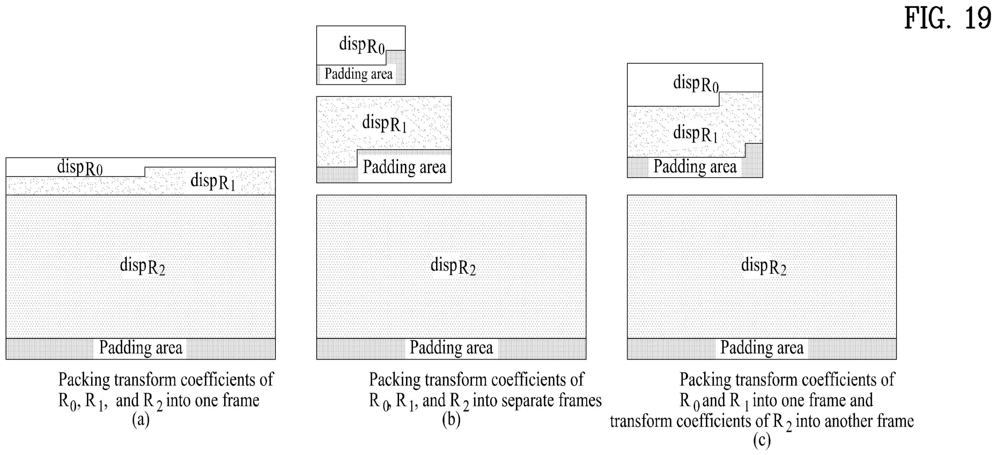

FIGS. 19-(a) to 19-(c) illustrate examples of generating a displacement vector video by packing displacement vector transform coefficients into one or more images according to embodiments. FIGS. 19-(a) to 19-(c) illustrate examples of three levels ($R_0$ to $R_2$), i.e., cases where subdivision is performed twice. In FIGS. 19-(a) to 19-(c), $disp_{R0}$ represents the displacement vector transform coefficients of level 0 ($R_0$), $disp_{R1}$ represents the displacement vector transform coefficients of level 1 ($R_1$), and $disp_{R2}$ represents the displacement vector transform coefficients of level 2 ($R_2$). This is merely one embodiment, and the number of levels may vary depending on the number of times of subdivision.

FIG. 19-(a) illustrates an example in which the displacement vector transform coefficients of the three levels ($R_0$ to $R_2$) are packed into a single image. That is, it illustrates an example in which the displacement vector transform coefficients of $R_0$, $R_1$, and $R_2$ are packed into a single frame. In the case where the number of the displacement vector transform coefficients of $R_0$, $R_1$, and $R_2$ is smaller than the size of the frame, a padding area may be present.

FIG. 19-(b) illustrates an example in which the displacement vector transform coefficients of the three levels ($R_0$ to $R_2$) are packed into separate images. That is, it illustrates an example in which the displacement vector transform coefficients of $R_0$, $R_1$, and $R_2$ are packed into separate frames. In the case where the number of the displacement vector

transform coefficients of $R_0$ is smaller than the size of the corresponding frame, a padding area may be present in the frame. In the case where the number of the displacement vector transform coefficients of $R_1$ is smaller than the size of the corresponding frame, a padding area may be present in the frame. In the case where the number of the displacement vector transform coefficients of $R_2$ is smaller than the size of the corresponding frame, a padding area may be present in the frame. In one embodiment, the frames for the respective levels may have different sizes.

FIG. 19-(c) illustrates an example in which the displacement vector transform coefficients of one level are packed into one image, while the displacement vector transform coefficients of the other levels are packed into another image. That is, it illustrates an example in which the displacement vector transform coefficients of $R_0$ and $R_1$ are packed into one frame, and the displacement vector transform coefficients of $R_2$ are packed into another frame. In the case where the number of the displacement vector transform coefficients of $R_0$ and $R_1$ is smaller than the size of the corresponding frame, a padding area may be present in the frame. In the case where the number of the displacement vector transform coefficients of $R_2$ is smaller than the size of the corresponding frame, a padding area may be present in the frame.

As shown in FIGS. 19-(a) to 19-(c), when packing the displacement vector transform coefficients of the respective levels into one or more frames, the displacement vector transform coefficients may be packed into bx×by blocks. Further, the displacement vector transform coefficient blocks may be packed into an image according to a z-scan order, zig-zag scan order, or the like.

According to embodiments, the size of the frame into which the displacement vector transform coefficients are packed may be determined as (bx×L)×(by×M), where bx and by are parameters that determine the width and height of each block, and L and M are parameters that determine the number of blocks included in each row and column of the frame.

The parameters L and M may be determined according to an agreement between the encoder and the decoder. Alternatively, L (or M) may be defined according to an agreement between the encoder and the decoder, and then M (or L) may be derived based on the number of displacement vector transform coefficients (see Equation 2), or may be derived per level.

According to embodiments, Equation 3 represents an example of deriving the parameter L, i.e., $L_{TargetLoD}$, according to the LoD level. Here, the LoD level may be used interchangeably with "level" or "subdivision level." In particular, Equation 3 is valid when the displacement vector transform coefficients of respective levels are packed into separate images, as shown in FIG. 19-(b).

[Equation 3]

$L_{TargetLoD} = geometryVideoWidthInBlocks_{TargetLoD}$

$geometryVideoWidthInBlocks_{TargetLoD} = geometryVideoWidthInBlocks >> (liftingSubdivisionIterationCount - TargetLoD)$

In Equation 3, each parameter may be defined as follows:

$L_{TargetLoD}$ (= $geometryVideoWidthInBlocks_{TargetLoD}$) denotes the number of blocks in a row in the frame into which the displacement vector transform coefficients of the TargetLoD level are packed.

geometryVideoWidthInBlocks denotes the number of blocks in a row in the frame into which the displacement vector transform coefficients of the highest LoD level are packed. The highest LoD level refers to the level of the final mesh obtained after performing the full number of subdivisions.

liftingSubdivisionIterationCount denotes the number of iterations of subdivision performed on the base mesh. The number of iterations of subdivision may be used interchangeably with the term "the number of subdivisions."

TargetLoD denotes the LoD level of the displacement vector transform coefficients to be packed.

In Equation 3, geometryVideoWidthInBlocks is right-shifted by liftingSubdivisionIterationCount - TargetLoD. This is because, as shown in FIG. 19-(b), the size of the three images decreases with the level, and thus the resolution width decreases. Further, liftingSubdivisionIterationCount - TargetLoD, i.e., subtracting TargetLoD from liftingSubdivisionIterationCount, determines how much the image is to be reduced from its maximum size. By subtracting the target LoD level from liftingSubdivisionIterationCount, the degree of reduction may be derived.

In one embodiment, when a level for which encoding is skipped (e.g., a level with zeroDispFlag equal to 1) occurs, the operation of packing the displacement vector transform coefficients of the level may also be skipped.

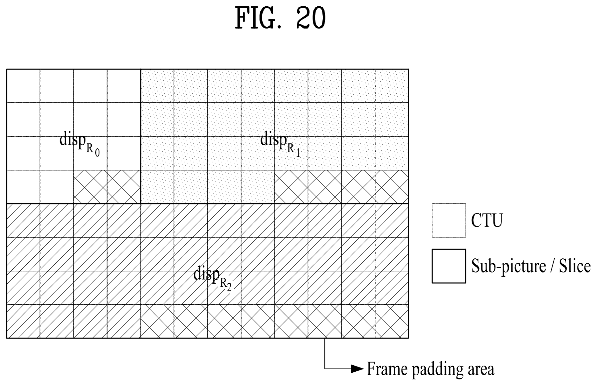

As an additional packing method, displacement vectors (or displacement vector transform coefficients) of each subdivision level (e.g., $disp_{R0}$, $disp_{R1}$, $disp_{R2}$) may be packed to match the sub-picture (or slice) sizes and then padding is performed to pack the vectors (or coefficients) into a single frame, as shown in FIG. 20.

FIG. 20 illustrates an example of a sub-picture-based displacement vector transform coefficient packing method according to embodiments. In this case, the displacement vector bitstreams only up to the LoD level to be decoded may be extracted on a sub-picture basis. In FIG. 20, a coding tree unit (CTU) is used in splitting a video frame into coding tree units, particularly when the video frame is split in a tree structure for encoding.

According to embodiments, displacement vector transform coefficients may be packed into one or more frames in the format of any one of FIGS. 19-(a) to 19-(c) or FIG. 20 to generate displacement vector video. Here, "displacement vector video" may be used interchangeably with "displacement video" or "displacement vector transform coefficient video." In the case where the displacement vector transform coefficients of the respective levels are packed into separate images as in FIG. 19-(b), displacement vector video may be generated for each level.

According to embodiments, the displacement vector transform coefficient video codec-based encoder 12017 encodes the displacement vector transform coefficient video using a video codec to generate a displacement vector bitstream. Here, the term displacement vector bitstream may be used interchangeably with the displacement vector video bitstream. According to embodiments, the video codec employed for the displacement vector transform coefficient video codec-based encoder 12017 may be a scalable video codec. In this case, video codecs may be provided for each level.

In the case where the displacement vector transform coefficient zero run-length encoder 12018 is selected via the switching part 12015, the displacement vector transform coefficient zero run-length encoder 12018 may perform zero run-length encoding on the displacement vector transform coefficients to generate a displacement vector bitstream. According to embodiments, the displacement vector transform coefficient zero run-length encoder 12018 may perform zero run-length encoding on the displacement vector transform coefficients on a level-by-level basis. In one embodiment, when a level for which encoding is skipped (e.g., a level with zeroDispFlag equal to 1) occurs, zero run-length encoding may also be skipped for the displacement vector transform coefficients of the level.

For example, suppose that the displacement vector transform coefficients are composed of (1, -1, 0), (-2, 0, 0), (0, 0, 0), (0, 0, 0), (0, 0, 0), (-1, 0, 0), N instances of (0, 0, 0),..., (0, 0, 0). In this case, the value of zero Run after (1, -1, 0) is 0 because there are no displacement vector transform coefficient components of (0, 0, 0) in the three axes. The value of zero Run after (-2, 0, 0) is 3 because there are three instances of (0, 0, 0). The value of zeroRun after (-1, 0, 0) is N because there are N instances of (0, 0, 0).

In the case where the displacement vector transform coefficient arithmetic encoder 12019 is selected via the switching part 12015, the displacement vector transform coefficient arithmetic encoder 12019 may perform entropy coding-based arithmetic encoding on the displacement vector transform coefficients to generate a displacement vector bitstream. According to embodiments, the displacement vector transform coefficient arithmetic encoder 12019 may perform arithmetic encoding on the displacement vector transform coefficients on a level-by-level basis. In one embodiment, when a level for which encoding is skipped (e.g., a level with zeroDispFlag equal to 1) occurs, arithmetic encoding may also be skipped for the displacement vector transform coefficients of the level.

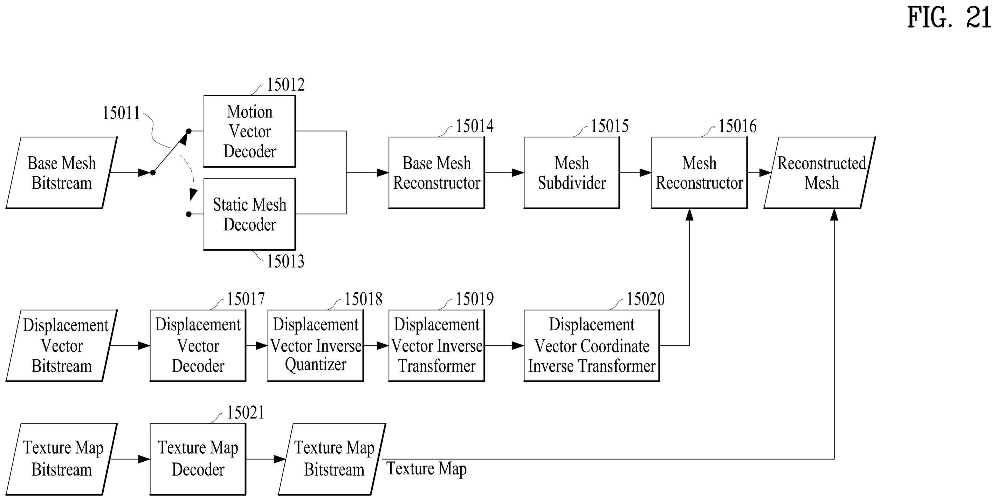

FIG. 21 illustrates a reception apparatus according to embodiments. In the present disclosure, the reception apparatus in FIG. 21 may be referred to as a mesh data reception apparatus, a decoder, a decoder of a reception apparatus, a V-Mesh decoder, or a dynamic mesh decoder.

FIG. 21 corresponds to the reception apparatus 110 or mesh video decoder 113 of FIG. 1, the decoder of FIGS. 11 or 12, the reception apparatus of FIG. 14, and/or a corresponding receiving decoding apparatus. Each component of FIG. 21 corresponds to hardware, software, a processor, and/or a combination thereof. The reception (decoding) operation of FIG. 21 may follow a reverse process to the corresponding process of the transmission (encoding) operation of FIG. 15. In FIG. 21, the order in which the blocks are executed may be changed. Some blocks may be omitted, and some new blocks may be added.

The apparatus of FIG. 21 may broadly include a base mesh decoder, a displacement information decoder, and a texture map decoder. According to embodiments, the base mesh decoder may include a switching part 15011, a motion vector decoder 15012, a static mesh decoder 15013, a base mesh reconstructor 15014, a mesh subdivider 15015, and a mesh reconstructor 15016. According to embodiments, the displacement information decoder may include a displacement vector decoder 15017, a displacement vector quantizer 15018, a displacement vector inverse quantizer 15019, and a displacement vector coordinate inverse transformer 15020. Here, the displacement vector quantizer 15018, inverse quantizer 15019, and coordinate inverse transformer 15020 are optional.

According to embodiments, the bitstream of the mesh data received by the receiver (not shown) may be subjected to file/segment decapsulation, and may then be demultiplexed into a base mesh bitstream, a displacement vector bitstream, and a texture map bitstream by a demultiplexer (not shown). In the case where inter-frame encoding (i.e., inter encoding) has been applied to the current mesh, the base mesh bitstream may be a motion vector bitstream.

According to embodiments, the base mesh bitstream may be provided to the motion vector decoder 15012 or the static mesh decoder 15013 via the switching part 15011.

For example, in the case where inter-frame encoding (i.e., inter encoding) has been applied to the current mesh, the base mesh bitstream, i.e., the motion vector bitstream, is received, demultiplexed, and then output to the motion vector decoder 15012 via the switching part 15011. In another example, in the case where intra-frame encoding (i.e., intra encoding) has been applied to the current mesh, the base mesh bitstream is received, demultiplexed, and then output to the static mesh decoder 15013 via the switching part 15011. Here, the motion vector decoder 15012 may be referred to as a motion decoder.

According to embodiments, the motion vector decoder 15012 may decode the motion vector bitstream on a per-vertex or per-subgroup basis.

According to embodiments, the motion vector decoder 15012 may reconstruct the final motion vector by adding the decoded motion vector difference (i.e., the residual motion vector) from the bitstream to the previously decoded motion vector used as a predictor. That is, the motion vector decoder 15012 may decode motion vector differences (or residual motion vectors) at the vertex or subgroup (or sub-block) level from the motion vector bitstream, perform prediction based on connectivity information using previously decoded motion vectors as predictors, and add the residual motion vectors to the predicted information to decode the motion vectors.

According to embodiments, the static mesh decoder 15013 may decode the base mesh bitstream to restore connectivity information, vertex geometry information, texture coordinates (i.e., attribute geometry information), normal information, and the like related to the base mesh.

According to embodiments, the base mesh reconstructor 15014 may reconstruct the current base mesh based on the decoded motion vectors or decoded base mesh. For example, in the case where inter-frame encoding has been applied to the current mesh, the base mesh reconstructor 15014 may add the decoded (or reconstructed) motion vectors to the reference base mesh and perform inverse quantization to generate the reconstructed base mesh (i.e., the current base mesh). In another example, in the case where intra-frame encoding has been applied to the current mesh, the base mesh reconstructor 15014 may perform inverse quantization on the decoded (or reconstructed) base mesh output by the static mesh decoder 15013 to generate the reconstructed base mesh (i.e., the current base mesh).

According to embodiments, the mesh subdivider 15015 may subdivide the base mesh to generate additional vertices. Depending on the subdivision method, the geometry connectivity information, texture coordinate connectivity information, and texture coordinates may be implicitly derived to generate vertices.

According to embodiments, the mesh subdivider 15015 may perform subdivision using a method such as mid-edge, Loop, or Catmul&Clark.

According to embodiments, the number of mesh subdivisions by the mesh subdivider 15015 may be determined based on a user parameter or an agreement between the encoder/decoder. According to embodiments, the vertices of the base mesh may be defined as the vertices of level 0 ($R_0$), the vertices newly generated by performing the subdivision once as the vertices of level 1 ($R_1$),..., and the vertices newly generated by performing the subdivision n times as the vertices of level n ($R_n$). Also, level 0 may be referred to as the 0-th level ($R_0$), level 1 as the first level ($R_1$),..., and level n as the n-th level ($R_n$).

According to embodiments, LoD0, LoD1,..., LoDn may be defined as in Equation 1 above.

That is, the base mesh includes vertices for LoD0. The first subdivision mesh, generated by subdividing the base mesh once, includes vertices for LoD1. In other words, LoD1 includes the vertices of the base mesh (i.e., $R_0$ vertices) and the newly generated level 1 vertices (i.e., $R_1$ vertices) generated by subdividing the base mesh. Further, the second subdivision mesh, generated by subdividing the first subdivision mesh, includes vertices for LoD2. That is, LoD2 includes the vertices of the base mesh (i.e., $R_0$ vertices), the level 1 vertices (i.e., $R_1$ vertices) newly generated by subdividing the base mesh, and the level 2 vertices (i.e., $R_2$ vertices) newly generated by subdividing the first subdivision mesh.

According to embodiments, the mesh subdivision by the mesh subdivider 15015 or the number of times of subdivision may be determined according to the quality (or target LoD) of the reconstructed mesh.

According to embodiments, the displacement vector decoder 15017 may perform video codec-based decoding, or zero run-length decoding, or arithmetic decoding on the demultiplexed displacement vector bitstream as a video bitstream. Here, the displacement vector decoder may be used interchangeably with a displacement vector transform decoder.

According to embodiments, the displacement vector decoder 15017 may decode and reconstruct the displacement vectors by performing the inverse process of the displacement vector encoding method on the transmitting side.

According to embodiments, the displacement vector decoder 15017 may decode received displacement vector transform coefficients for a specific LoD (i.e., up to a specific LoD level) decode displacement vector transform coefficients for a specific LoD (i.e., up to a specific LoD level) according to the processing capability of the receiver or the receiver capability. Detailed descriptions of LoD-based displacement vector decoding will be provided later.

According to embodiments, the displacement vector transform coefficients decoded by the displacement vector decoder 15017 are provided to the displacement vector inverse quantizer 15018.

According to embodiments, the displacement vector inverse quantizer 15018 may inverse-quantize the decoded displacement vectors, i.e., the displacement vector transform coefficients.

According to embodiments, the encoder of the transmission apparatus may quantize the displacement vector transform coefficients using different quantization parameters for each axis. The quantization parameters or scaling parameters may be derived based on an encoder/decoder agreement to determine the quantization rate for each LoD level.

According to embodiments, the displacement vector inverse transformer 15019 may perform inversely transform the inverse-quantized displacement vector transform coefficients, which have been obtained by applying transformation by the encoder, to output displacement vectors. According to embodiments, lifting inverse transform, wavelet inverse transform, or the like may be performed. In the case where the lifting inverse transform is performed by the displacement vector inverse transformer 15019, a process may be performed in which the displacement vectors of vertices used for prediction by the encoder are updated based on the parsed residual signals.

According to embodiments, when the reconstructed displacement vectors have values in the normal coordinate system (n, t, bt), the displacement vector coordinate inverse transformer 15020 may inversely transform the reconstructed displacement vectors into the Cartesian coordinate system (x, y, z).

That is, the encoder of the transmission apparatus may transform vertex displacement vectors calculated in the (x, y, z) space into the (normal, tangential, bi-tangential coordinate system (also referred to as the normal coordinate system) based on the normal vector of each vertex. The normal vector may be calculated for each subdivided vertex based on geometry information and connectivity information related to neighboring vertices.

According to embodiments, the vector inverse quantizer 15018, displacement vector inverse transformer 15019, and displacement vector coordinate inverse transformer 15020 may be collectively referred to as a displacement vector reconstructor. That is, when displacement vector transform coefficients decoded by the displacement vector decoder 15017 pass through the displacement vector reconstructor, the final reconstructed displacement vectors may be generated. In the case where the displacement vector decoder 15017 has performed scalable decoding (e.g., 2D video decoding, zero run-length decoding, or arithmetic decoding) only on the transform coefficients of a specific LoD, the final reconstructed displacement vectors are displacement vectors of the specific LoD.

According to embodiments, the received and demultiplexed texture map bitstream may be input to a texture map decoder 15021. According to embodiments, the texture map decoder 15021 may decode the texture map configured for a specific LoD (i.e., up to a specific LoD level) using a 2D scalable decoder. That is, the texture map decoder 15021 may apply 2D scalable decoding to reconstruct the texture map up to the specific LoD level. To this end, the texture map decoder 15021 may receive subdivision-related information and LoD-related information from the mesh subdivider 15015 as signaling information. Additionally, the texture map decoder 15021 may receive LoD-related information used in the scalable decoding of displacement vectors from the displacement vector decoder 15017 as signaling information.

Next, the displacement vector decoder 15017 will be described in detail.

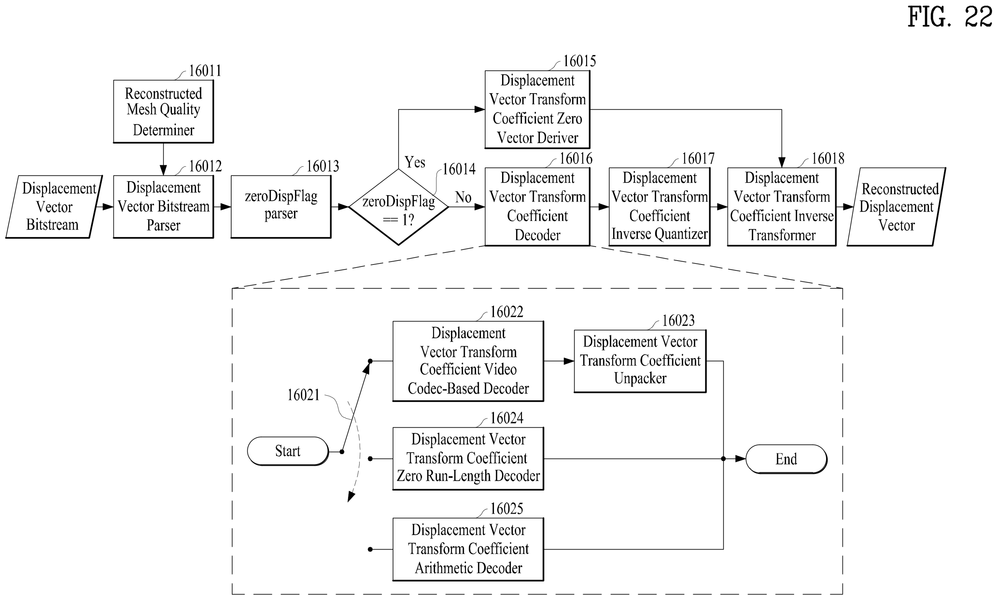

FIG. 22 is an example detailed block diagram of the displacement vector decoder according to embodiments. In the present disclosure, the displacement vector decoder 15017 may be referred to as a displacement vector transform coefficient decoder. Each component of FIG. 22 may correspond to hardware, software, a processor, or a combination thereof. In FIG. 22, the order in which the blocks are executed may be changed. Some blocks may be omitted, and some blocks may be newly added.

According to embodiments, the displacement vector decoder 15017 may include a reconstructed mesh quality determiner 16011, a displacement vector bitstream parser 16012, a flag information parser 16013, a determiner 16014, a displacement vector transform coefficient zero vector deriver 16015, and a displacement vector transform coefficient decoder 16016. In FIG. 22, the displacement vector transform coefficient inverse quantizer 15018 corresponds to the displacement vector inverse quantizer 15018 of FIG. 21, and the displacement vector transform coefficient inverse transformer 15019 corresponds to the displacement vector inverse transformer 15019 of FIG. 21, and thus detailed descriptions thereof are omitted below.

According to embodiments, the displacement vector transform coefficient decoder 16016 may include a switching part 16021, a displacement vector transform coefficient video codec-based decoder 16022, a displacement vector transform coefficient unpacker 16023, a displacement vector transform coefficient zero run-length decoder 16024, and a displacement vector transform coefficient arithmetic decoder 16025.

According to embodiments, the displacement vector decoder 15017 may determine the target quality of the mesh to be reconstructed using the reconstructed mesh quality determiner 16011, and/or may parse a portion of the displacement vector bitstream according to the target quality using the displacement vector bitstream parser 16012. According to embodiments, the parsed portion of the displacement vector bitstream may be decoded using a video codec-based decoding method, zero run-length decoding method, or arithmetic decoding method. According to embodiments, the displacement vector decoder 15017 may decode displacement vector transform coefficients using only one of a 2D video codec-based decoding method, zero run-length decoding method, and arithmetic decoding method, or using combinations of one or more thereof. The decoded displacement vector transform coefficients may then be inverse-quantized and/or inverse-transformed to reconstruct the displacement vectors.

According to embodiments, the reconstructed mesh quality determiner 16011 may determine the quality of the mesh to be reconstructed based on the receiver performance, display environment, network conditions, and the like, or by setting a target number of vertices or target bitrate at the receiver side to determine the appropriate reconstructed mesh quality.

In one embodiment, the mesh quality determined by the reconstructed mesh quality determiner 16011 may be provided to the displacement vector bitstream parser 16012.

According to embodiments, the quality of a mesh may be reconstructed through various quality combinations of the components of a dynamic mesh. In the present disclosure, the components that may determine the quality of a dynamic mesh include displacement vectors, which determine the quality of geometry information, and a texture map, which determines the quality of attribute information.

According to embodiments, the reconstructed mesh quality determiner 16011 may determine a parameter TargetLoD, which determines the quality of the geometry information about the mesh to be decoded, and a parameter TargetLevel, which determines the quality of the attribute information about the mesh to be decoded.

According to embodiments, TargetLoD is a parameter that determines the LoD level of the displacement vector transform coefficients to be decoded and may indicate the number of times of subdivision to perform on the mesh to be decoded. TargetLoD determined by the reconstructed mesh quality determiner 16011 may be provided to the mesh subdivider 15015, which may perform subdivisions on the reconstructed base mesh according to the value of TargetLoD, i.e., the number of times of subdivision. For example, when TargetLoD is 2, subdivision may be performed on the reconstructed base mesh twice. In this case, the displacement vector decoder may decode the displacement vector transform coefficients up to the level corresponding to TargetLoD.

According to embodiments, TargetLevel is a parameter that determines the SHVC (Scalable High Efficiency Video Coding) layer of the texture map to be decoded and may indicate the number of SHVC layers to be decoded. According to embodiments, TargetLevel determined by the reconstructed mesh quality determiner 16011 may be provided to the texture map decoder 15021, which may decode the SHVC layers of the texture map up to TargetLevel. That is, the texture map decoder 15021 may decode the texture map for all SHVC layers up to TargetLevel.

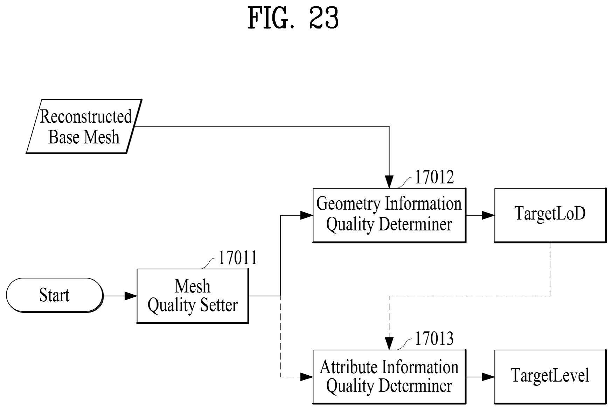

FIG. 23 is an example detailed block diagram of a reconstructed mesh quality determiner according to embodiments. According to embodiments, the reconstructed mesh quality determiner 16011 may include a mesh quality setter 17011, a geometry information quality determiner 17012, and an attribute information quality determiner 17013.

According to embodiments, the reconstructed mesh quality determiner 16011 may receive subdivision count information for determining the LoD for the displacement vectors of a dynamic mesh and the total number of SHVC layers of the encoded texture map from the encoder of the transmission apparatus and may selectively determine the quality of the geometry information and texture map (i.e., attribute information).

To this end, at the receiver side, a user may set a target number of vertices, and/or a target number of polygons, and/or a target bitrate through the mesh quality setter 17011. The quality of the geometry information and/or attribute information to be reconstructed may also be determined according to the receiver performance, network conditions, display environment, and the like.

According to embodiments, the geometry information quality determiner 17012 may derive the number of subdivisions for the base mesh according to the target geometry information quality determined (or set) by the mesh quality setter 17011.

According to embodiments, when the geometry information quality determiner 17012 receives a target bitrate for reconstruction from the mesh quality setter 17011, it may calculate the size of the displacement vector bitstream that may be parsed according to the target bitrate and then determine the target number of times of subdivision.

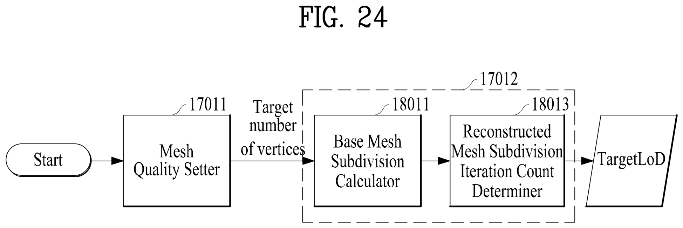

According to embodiments, when the geometry information quality determiner 17012 receives a target number of vertices for reconstruction from the mesh quality setter 17011, it may determine the geometry information quality through a process as shown in FIG. 24.

FIG. 24 is an example detailed block diagram of a geometry information quality determiner according to embodiments. The geometry information quality determiner 17012 in FIG. 24 may include a base mesh subdivision calculator 18011 and a reconstructed mesh subdivision iteration count determiner 18013.

According to embodiments, the base mesh subdivision calculator 18011 may receive an input target number of vertices for the mesh to be reconstructed from the user through the mesh quality setter 17011, set the input target number of vertices as a threshold, and calculate the maximum number of times of subdivision that may be performed on the reconstructed base mesh. In embodiments, the number of vertices may increase by a factor of N compared to the previous subdivided mesh each time the reconstructed base mesh subdivision is performed.

According to embodiments, the reconstructed mesh subdivision iteration count determiner 18013 may recursively compare the number of vertices generated by performing subdivision with the input target number of vertices to determine the maximum number of times subdivision may be performed without exceeding the target number of vertices. The maximum number of times of subdivision may be equal to TargetLoD. That is, the maximum number of times of subdivision determined by the reconstructed mesh subdivision iteration count determiner 18013 may be output as TargetLoD. For example, when TargetLoD is 2, subdivision may be performed twice, and displacement vector transform coefficients corresponding to LoD2 may be decoded.

According to embodiments, the attribute information quality determiner 17013 may derive the number of SHVC layers of the texture map to be decoded by the texture map decoder 15021 according to the target attribute information quality determined by the mesh quality setter 17011.

According to embodiments, when the attribute information quality determiner 17013 receives a target bitrate for reconstruction from the mesh quality setter 17011, it may calculate the size of the SHVC sub-layer bitstream that may be parsed according to the target bitrate and determine the SHVC layers to decode.

According to embodiments, in the texture map decoder 15021, the quality of the texture map of the dynamic mesh may be determined dependent on the target LoD level of the displacement vectors for decoding. That is, the attribute information quality determiner 17013 may determine the quality of the texture map (i.e., TargetLevel) based on TargetLoD determined by the geometry information quality determiner 17012.

According to embodiments, the attribute information quality determined by the attribute information quality determiner 17013 (i.e., TargetLevel or SHVC layer information related to the texture map) may be provided to the texture map decoder 15021.

In the present disclosure, when the texture map quality (i.e., attribute information) and geometry information quality related to a dynamic mesh are determined dependently, the texture map quality (i.e., TargetLevel) may be determined based on the parameter TargetLoD as in Equation 4 below.

[Equation 4]

$$TargetLevel = TargetLoD + 1$$

According to embodiments, the displacement vector bitstream parser 16012 may parse only a portion of the entire received displacement vector bitstream according to the reconstructed mesh target quality determined by the reconstructed mesh quality determiner 16011. According to embodiments, either the entire received displacement vector bitstream or the portion of the displacement vector bitstream parsed by the displacement vector bitstream parser 16012 may be provided to the displacement vector decoder 16016.

According to embodiments, the displacement vector bitstream parser 16012 may parse only a portion of the received displacement vector bitstream according to the target bitrate determined by the reconstructed mesh quality determiner 16011.

According to embodiments, the displacement vector bitstream parser 16012 may parse only a portion of the received displacement vector bitstream according to TargetLoD determined by the reconstructed mesh quality determiner 16011.

According to embodiments, the texture map decoder 15021 may parse and decode only a portion of the received texture map bitstream according to TargetLevel determined by the reconstructed mesh quality determiner 16011.

According to embodiments, the flag information parser 16013 parses 1-bit flag information, namely zeroDispFlag, included in the received signaling information.

According to embodiments, the determiner 16014 checks whether the value of zeroDispFlag parsed by the flag information parser 16013 is 1. In one embodiment, when the value of zeroDispFlag is 1, the displacement vector transform coefficient zero vector deriver 16015 may operate. When the value is not 1, the displacement vector transform coefficient decoder 16016 may operate.

As described above, when all displacement vector transform coefficients of a specific level, for example, the L-th level ($R_L$) are zero vectors, the encoder of the transmission apparatus sets zeroDispFlag corresponding to the L-th level ($R_L$) to 1, transmits the same to the reception apparatus, and omits (or skips) the encoding of the displacement vector transform coefficients of the L-th level ($R_L$). In this case, according to one embodiment, the decoder of the reception apparatus may also omit (or skip) decoding of the displacement vector transform coefficients of the L-th level ($R_L$), and derive the displacement vector transform coefficients of the L-th level ($R_L$) as zero vectors.

According to embodiments, the displacement vector decoder 15017 may receive zeroDispFlag for each level of LoD or may receive zeroDispFlag only for a specific level or higher levels.

According to embodiments, zeroDispFlag may be received only for a specific level (e.g., L = numLoD-1, where numLoD is the total number of LoDs) based on an agreement between the encoder/decoder.

According to embodiments, zeroDispFlag may be received separately for each component of the displacement vector (normal, tangential, bi-tangential), or may be received for only specific components of the displacement vector.

According to embodiments, the displacement vector transform coefficient zero vector deriver 16015 may derive the values of displacement vector transform coefficients of a level where zeroDispFlag is 1 as zero vectors. For example, when zeroDispFlag of the parsed L-th level ($R_L$) is 1, the displacement vector transform coefficient zero vector deriver 16015 may derive the values of the displacement vector transform coefficients of the L-th level ($R_L$) as zero vectors. As another example, when zeroDispFlag for a specific component of the displacement vector of the L-th level ($R_L$) is 1, the displacement vector transform coefficient zero vector deriver 16015 may derive the value of the specific component of the displacement vector of the L-th level ($R_L$) as a zero vector. The displacement vector transform coefficients derived as zero vectors by the displacement vector transform coefficient zero vector deriver 16015 are then provided to the displacement vector transform coefficient inverse transformer 15019.

According to embodiments, the displacement vector transform coefficient decoder 16016 may decode the displacement vector transform coefficients of levels where zeroDispFlag is not 1. In this case, the displacement vector transform coefficients input to the displacement vector transform coefficient decoder 16016 may be displacement vector transform coefficients of levels where zeroDispFlag is not 1 in a partial bitstream parsed by the displacement vector bitstream parser 16012 according to the reconstructed mesh quality determined by the reconstructed mesh quality determiner 16011.

According to embodiments, the displacement vector transform coefficient decoder 16016 may decode the input displacement vector transform coefficients using video codec-based decoding, zero run-length decoding, or arithmetic decoding.

According to embodiments, the method for the decoding of the displacement vector transform coefficients the displacement vector transform coefficient decoder 16016 may be determined as a specific method according to an encoder/decoder agreement. Alternatively, the encoding method determined by the encoder of the transmission apparatus may be received from the transmission apparatus in the form of a flag or index and parsed to determine the decoding method.

According to embodiments, different encoding/decoding methods may be used for different LoD levels of displacement vectors (or displacement vector transform coefficients).

According to embodiments, encoder/decoder information may be received for each LoD level of displacement vectors (or displacement vector transform coefficients), or a fixed encoding/decoding method may be used according to an agreement.

As described above, the displacement vector transform coefficient decoder 16016 may decode the input displacement vector transform coefficients using video codec-based decoding, zero run-length decoding, or arithmetic decoding.

For example, when video codec-based decoding is to be performed, the switching part 16021 switches to the displacement vector transform coefficient video codec-based decoder 16022. When zero run-length decoding is to be performed, the switching part 16021 switches to the zero run-length decoder 16024. When arithmetic decoding is to be performed, the switching part 16021 switches to the arithmetic decoder 16025. In the present disclosure, the displacement vector transform coefficient video codec-based decoder 16022 may also be referred to as a video decoder, the displacement vector transform coefficient zero run-length decoder 16024 may also be referred to as a zero run-length decoder, and the displacement vector transform coefficient arithmetic decoder 16025 may also be referred to as an arithmetic decoder.

According to embodiments, the displacement vector transform coefficient video codec-based decoder 16022 may receive a displacement vector bitstream containing displacement vector transform coefficients as input and decode displacement vector transform coefficient images or video through a video decoding process. In the case where encoding is skipped for a specific level (e.g., level 1 ($R_1$)) by the transmission apparatus, i.e., zeroDispFlag for level 1 ($R_1$) is equal to 1, the displacement vector bitstream for level 1 ($R_1$) is not present and is not decoded. Instead, the displacement vector transform coefficients of level 1 ($R_1$) are derived as zero vectors by the displacement vector transform coefficient zero vector deriver 16015.

Further, the displacement vector transform coefficient video codec-based decoder 16022 may reconstruct the mesh at a resolution based on the receiver performance, network environment, and the like, and decode a partial parsed displacement vector bitstream only up to the target LoD. For example, when the total number of LoDs (or the number of levels) is 4, and the quality of the reconstructed mesh is determined to be LoD2 or level2 by the reconstructed mesh quality determiner 16011, the displacement vector bitstream parser 16012 parses the displacement vector bitstream for levels (i.e., $R_0$, $R_1$, and $R_2$) included LoD2, namely the displacement vector bitstream up to level 2. In the case where encoding of a specific level (e.g., level 1, $R_1$) among the levels (i.e., $R_0$, $R_1$, and $R_2$) included LoD2 is skipped, i.e., zeroDispFlag for level 1 ($R_1$) is 1, the displacement vector bitstream for level 1 ($R_1$) is not present, and thus parsing/decoding is skipped. Instead, the displacement vector transform coefficients of level 1 ($R_1$) are derived as zero vectors by the displacement vector transform coefficient zero vector deriver 16015.

According to embodiments, the displacement vector transform coefficient unpacker 16023 may perform unpacking according to a scanning order defined by an agreement made by the encoder/decoder. Alternatively, it may derive a scanning order based on the characteristics of the displacement vector transform coefficients perform unpacking. Alternatively, it may receive the scanning order from the encoder of the transmission apparatus.

When unpacking is performed by the displacement vector transform coefficient unpacker 16023, the number of displacement vectors (or displacement transform coefficients) to reconstruct may be derived as the total number of vertices of a mesh generated by subdividing the base mesh.

According to embodiments, the zero run-length decoder 16024 may receive a displacement vector bitstream containing displacement vector transform coefficients as input and decodes the zero run value. When the value is not 0, the vertex displacement vector level (i.e., vertex displacement vector transform coefficients) corresponding to the zero run value are derived as 0 by the transform coefficient level deriver. In the case where encoding is skipped for a specific level (e.g., level 1 ($R_1$)) by the transmission apparatus, i.e., zeroDispFlag for level 1 ($R_1$) is equal to 1, the displacement vector bitstream for level 1 ($R_1$) is not present and is not decoded. Instead, the displacement vector transform coefficients of level

1 (R$_1$) are derived as zero vectors by the displacement vector transform coefficient zero vector deriver 16015.

According to embodiments, depending on the current subdivision level of the displacement vector transform coefficients, only displacement vector transform coefficients up to a specific LoD level may be decoded. For example, when the total number of LoDs (or the number of levels) is 4, and the quality of the reconstructed mesh is determined to be LoD2 or level2 by the reconstructed mesh quality determiner 16011, the displacement vector bitstream parser 16012 parses the displacement vector bitstream for levels (i.e., R$_0$, R$_1$, and R$_2$) included LoD2, namely the displacement vector bitstream up to level 2. In the case where encoding of a specific level (e.g., level 1, R$_1$) among the levels (i.e., R$_0$, R$_1$, and R$_2$) included LoD2 is skipped, i.e., zeroDispFlag for level 1 (R$_1$) is 1, the displacement vector bitstream for level 1 (R$_1$) is not present, and thus parsing/decoding is skipped. Instead, the displacement vector transform coefficients of level 1 (R$_1$) are derived as zero vectors by the displacement vector transform coefficient zero vector deriver 16015.

According to embodiments, the arithmetic decoder 16025 may perform Exponential-Golomb decoding on a vertex index where nonzero displacement vector transform coefficient levels (i.e., displacement vector transform coefficients) occur, based on separate context information, and derive displacement vector transform coefficients of vertices with indices higher than the decoded index as zero vectors.

According to embodiments, arithmetic decoding may be performed based on different context information depending on the current subdivision level of displacement vector transform coefficients.

As described above, in order for the encoder of the transmission apparatus and/or the decoder of the reception apparatus to perform encoding/decoding for each LoD level or up to a specific LoD level, the encoder of the transmission apparatus may transmit signaling information including encoding-related information to the decoder of the reception apparatus. In this case, the decoder of the reception apparatus may parse the encoding-related information by parsing the signaling information, determine the quality of the reconstructed mesh based on the parsed encoding-related information, and then decode the displacement vector transform coefficients and/or texture map according to the determined mesh quality. Alternatively, the quality of the mesh to be reconstructed may be determined according to receiver performance, display environment, network conditions, and the like. Alternatively, the receiver may set a target number of vertices, a target bitrate, and the like, and determine the quality of the reconstructed mesh suitable for the set target values.

In addition, in the present disclosure, when image packing is performed, the displacement vector transform coefficients of all levels may be packed into a single frame as one image. Alternatively, the displacement vector transform coefficients of each level may be packed into a separate frame as an individual image. Alternatively, the displacement vector transform coefficients of a specific level may be packed into one frame as one image while the displacement vector transform coefficients of two or more levels may be packed into another frame as one image.

In addition, when all displacement vector transform coefficients of a specific level are zero vectors, the encoder of the transmission apparatus in the present disclosure may omit (skip) encoding for the level, and flag information (zeroDispFlag) indicating that the encoding for the level has been skipped may be included in signaling information to be transmitted to the decoder of the reception apparatus. In this case, the decoder of the reception apparatus may recognize, based on the received and parsed flag information (zeroDispFlag), that the encoding for the level has been skipped, and derive the displacement vector transform coefficients of the level as zero vectors.

According to embodiments, in the transmission apparatus (or the encoder of the transmission apparatus), signaling information may be generated by a metadata possessor (which is not shown and may be referred to as a metadata generator) and provided to corresponding blocks within the transmission apparatus and/or to the reception apparatus (or the decoder of the reception apparatus). In addition, a metadata parser (not shown) of the reception apparatus may parse the received signaling information and provide the parsed information to the corresponding blocks. According to embodiments, each block of the reception apparatus may perform an operation based on the signaling information.

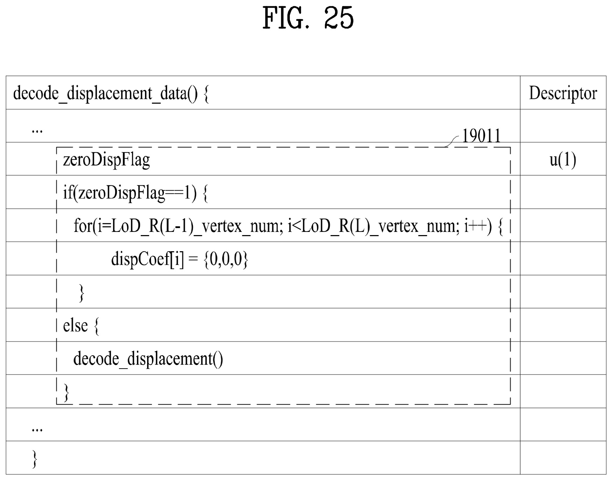

FIG. 25 illustrates an example syntax structure of displacement-related information (decode_displacement_data()) in signaling information according to embodiments. In particular, FIG. 25 shows an example of displacement-related information 19011 about the L-th level (R$_L$).

According to embodiments, the displacement-related information 19011 about the L-th level (R$_L$) may include a zeroDispFlag field.

The zeroDispFlag field may indicate whether the encoding of the displacement vector transform coefficients of the L-th level (R$_L$) has been omitted (skipped).

For example, in the case where the encoding of the displacement vector transform coefficients of the L-th level (RL) has been skipped, zeroDispFlag may be equal to 1. In the case where the encoding has not been skipped, zeroDispFlag may be equal to a value (e.g., 0) other than 1.

If the value of the zeroDispFlag field for the L-th level (R$_L$) is 1, the displacement vector transform coefficients of the L-th level (R$_L$) are derived as zero vectors. In FIG. 25, LoD_R(L-1)_vertex_num indicates the number of vertices of the (L-1)-th level (R$_{L-1}$), and LoD_R(L)_vertex_num indicates the number of vertices of the L-th level (R$_L$). That is, the operation iterates as many times as the number of vertices of the L-th level (R$_L$), thereby deriving the displacement vector transform coefficients of the L-th level (R$_L$) as zero vectors. For example, dispCoef[i] = (0,0,0) indicates that the displacement vector transform coefficient of the i-th vertex is derived as a zero vector.

When the value of zeroDispFlag for the L-th level ($R_L$) is not equal to 1, the displacement vector transform coefficients of the L-th level ($R_L$) may be decoded using at least one of a video codec-based decoding method, zero run-length decoding method, or arithmetic decoding method based on the information included in decode_displacement().

FIG. 25 is an example of the displacement-related information 19011 about the L-th level ($R_L$). By applying this process to all levels or some levels, displacement-related information 19011 may be provided as much as the number of all levels or some levels.

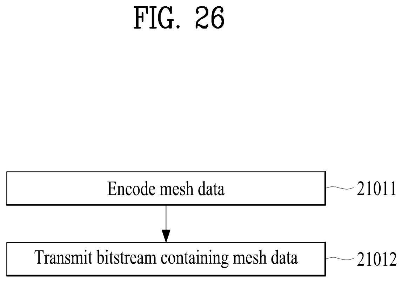

FIG. 26 is a flowchart illustrating an example of a transmission method according to embodiments. The transmission method may include encoding mesh data (21011) and transmitting a bitstream containing the encoded mesh data (21012). In one embodiment, the bitstream transmitted in operation 21012 may include a base mesh bitstream, a displacement vector bitstream, and a texture map bitstream.

According to embodiments, the operation 21011 of encoding the mesh data may include encoding displacement vectors or displacement vector transform coefficients. The operation 21011 of encoding the mesh data may also include encoding a base mesh and a texture map. For encoding of the base mesh and encoding of the texture map, which are omitted below for brevity, refer to the descriptions given above.

According to embodiments, in operation 21011 of encoding the mesh data, displacement vector transform coefficients may be encoded for each LoD level or up to a specific LoD level. In this case, as an encoding method, one or video codec-based encoding, zero run-length encoding, and arithmetic encoding, or a combination of one or more thereof may be used. Further, when the encoding method is the video codec-based method, image packing may be further included. In addition, in the present disclosure, when image packing is performed, the displacement vector transform coefficients of all levels may be packed into a single frame as one image. Alternatively, the displacement vector transform coefficients of each level may be packed into a separate frame as an individual image. Alternatively, the displacement vector transform coefficients of a specific level may be packed into one frame as one image while the displacement vector transform coefficients of two or more levels may be packed into another frame as one image.

According to embodiments, in operation 21011 of encoding the mesh data, when all displacement vector transform coefficients of a specific level are zero vectors, encoding for the level may be omitted (skipped), and flag information (zeroDispFlag) indicating that the encoding for the level has been skipped may be included in signaling information to be transmitted to the decoder of the reception apparatus.

For more details of the encoding of displacement vector transform coefficients, image packing of the displacement vector transform coefficients according to LoD levels, and skipping of encoding for a specific level in operation 21011, are not provided below to avoid redundancy, refer to the description of FIGS. 15 to 20. For details of the signaling information including displacement-related information, refer to the description of FIG. 25.

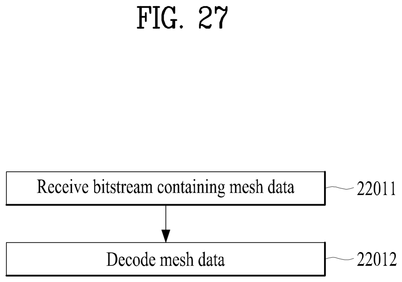

FIG. 27 is a flowchart illustrating an example reception method according to embodiments. The reception method may include receiving a bitstream containing mesh data (22011), and decoding the mesh data contained in the bitstream (22012). In one embodiment, operation 22011 of receiving the bitstream may include receiving the bitstream including a base mesh bitstream, a displacement vector bitstream, and a texture map bitstream.

According to embodiments, operation 22012 of decoding the mesh data may include decoding the displacement vector bitstream. Operation 22012 of decoding the mesh data may also include decoding the base mesh and texture map. For the decoding of the base mesh, which is not described below for brevity, refer to the descriptions give above.

According to embodiments, operation 22012 of decoding the mesh data may include parsing the encoding-related information by parsing the signaling information, determining the quality of the reconstructed mesh based on the parsed encoding-related information, and decoding the displacement vector transform coefficients and/or texture map according to the determined mesh quality. Alternatively, the quality of the mesh to be reconstructed may be determined according to receiver performance, display environment, network conditions, and the like. Alternatively, the receiver may set a target number of vertices, a target bitrate, and the like, and determine the quality of the reconstructed mesh suitable for the set target values. That is, the reconstructed mesh quality may determine the target LoD, and the decoding may be performed on displacement vector transform coefficients up to the target LoD or a level corresponding to the target LoD. In other words, in operation 22012 of decoding the mesh data, the displacement vector transform coefficients and/or texture map may be decoded according to the reconstructed mesh quality. Here, the decoding may be performed using a combination of one or more of video codec-based decoding, zero run-length decoding, and arithmetic decoding.

According to embodiments, in operation 22012 of decoding the mesh data, for each LoD level or for a specific LoD level, the flag information (zeroDispFlag) may be parsed, and decoding of the displacement vector transform coefficients of the level may be skipped depending on the parsed flag information (zeroDispFlag). The values of the displacement vector transform coefficients of the level whose decoding is skipped may be derived as zero vectors.

According to embodiments, operation 22012 of decoding the mesh data may include decoding a texture map of an SHVC layer based on the reconstructed mesh quality or based on TargetLevel determined based on the TargetLoD. According to embodiments, TargetLevel is a parameter that determines the SHVC (Scalable High Efficiency Video Coding) layer of the texture map to be decoded and may indicate the number of SHVC layers to be decoded. Accordingly, operation 22012 of decoding the mesh data may include decoding the texture map using SHVC. In this case, the texture map of SHVC layers may be decoded up to the TargetLevel.

For more details of the decoding of displacement vector transform coefficients and decoding of the texture map performed in operation 22012 of decoding the mesh data in FIG. 27, which are not described below to avoid redundancy, refer to the descriptions of FIGS. 21 to 24 given above. Also, for details of the displacement-related information including the flag information (zeroDispFlag), refer to FIG. 25.

As described above, the conventional V-Mesh compression method is designed to compress and reconstruct the displacement vector video and texture map video, which are generated during encoding, using a video codec based on full resolution. As a result, when it is difficult for the receiver to receive or use the full mesh data due to conditions of the receiver, the received mesh data may not be usable. To address this issue, the present disclosure proposes a method for scalable encoding and decoding of displacement vector videos and texture map videos, which may allow the receiver to selectively reconstruct and use mesh data.

Further, according to the present disclosure, depending on the receiver performance, display characteristics, or network environment, the user may be allowed to selectively reconstruct mesh data up to an available level based on the mesh subdivision levels. In addition, when multiple mesh data objects need to be represented, the user may be allowed to specify the precision and level of the mesh data to be reconstructed differently for each object based on the importance, frequency of use, or current usage of the objects such that the data may be reconstructed according to each desired level. Thereby, given resources may be allocated appropriately and used efficiently.

Therefore, according to the present disclosure, mesh data may be utilized in a wider variety of network environments and applications. In addition, by flexibly using the resources of the receiver, the scope of utilization of mesh data may be further expanded.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception apparatus including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations may be made in the present disclosure without departing from the spirit and scope of the disclosure. Thus, it is intended that the present disclosure cover the modifications and variations of the present disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the 3D data transmission/reception apparatus and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1. An apparatus for decoding mesh data, comprising:

   a base mesh decoder configured to decode a base mesh from a base mesh bitstream;
   a displacement information decoder configured to decode displacement information from a displacement vector bitstream;
   a reconstructor configured to reconstruct a mesh based on the decoded base mesh and the decoded displacement information; and
   a texture map decoder configured to decode a texture map from a texture map bitstream.

**2.** The apparatus of claim 1, wherein the displacement information decoder comprises:

a reconstructed mesh quality determiner configured to determine a target level of the mesh to be reconstructed;
a parser configured to parse a partial displacement vector bitstream from the displacement vector bitstream based on the determined target level of the mesh; and
a displacement vector decoder configured to decode the displacement information from the parsed partial displacement vector bitstream.

**3.** The apparatus of claim 2, wherein the base mesh decoder comprises:
a mesh subdivider configured to:

determine a number of iterations of subdivision based on the target level; and
subdivide the base mesh based on the determined number of iterations of the subdivision.

**4.** The apparatus of claim 2, wherein the texture map decoder is configured to: decode the texture map by parsing a partial texture map bitstream from the texture bitstream based on the target level.

**5.** The apparatus of claim 2, wherein the displacement information decoder further comprises: a zero vector deriver configured to derive values of the displacement information for a specific level as zero vectors based on flag information included in received signaling information.

**6.** The apparatus of claim 2, wherein the displacement information decoder is configured to:
decode the displacement information based on at least one of video codec-based decoding, zero run-length decoding, or arithmetic decoding.

**7.** An apparatus for encoding mesh data, comprising:

a base mesh processor configured to encode a base mesh generated by simplifying an original mesh to generate a base mesh bitstream;
a displacement information processor configured to encode displacement information generated based on the base mesh to generate a displacement vector bitstream;
a mesh reconstructor configured to reconstruct a mesh based on the encoded base mesh and the encoded displacement information; and
a texture map processor configured to encode a texture map generated based on the original mesh and the reconstructed mesh to generate a texture map bitstream.

**8.** The apparatus of claim 7, wherein the base mesh processor comprises:
a mesh subdivider configured to:

subdivide the base mesh at least once to generate additional vertices; and
determine levels varying with a number of iterations of the subdivision.

**9.** The apparatus of claim 8, wherein the displacement information processor is configured to:
encode the displacement information for each of the determined levels to generate the displacement vector bitstream.

**10.** The apparatus of claim 9, wherein the displacement information processor is configured to:

based on that values of the displacement information for a specific level among the levels are zero vectors, skip the encoding for the specific level; and
transmit, in signaling information, flag information indicating that the encoding of the displacement information for the specific level is skipped.

**11.** The apparatus of claim 7, wherein the displacement information processor is configured to:
encode the displacement information based on at least one of video codec-based encoding, zero run-length encoding, or arithmetic encoding.

**12.** The apparatus of claim 11, wherein the displacement information processor comprises:

a packer configured to pack the displacement information into an image to encode the displacement information based on the video codec-based encoding,

wherein the packer packs the displacement information for each level into each image.

13. A method of transmitting mesh data, the method comprising:

encoding an original mesh; and
transmitting a bitstream containing the encoded mesh and signaling information.

14. The method of claim 13, wherein the encoding comprises:

base mesh processing comprising:

encoding a base mesh generated by simplifying the original mesh; and
generating a base mesh bitstream;
displacement information processing comprising:

encoding displacement information generated based on the base mesh; and
generating a displacement vector bitstream;
mesh reconstruction comprising:

reconstructing a mesh based on the encoded base mesh and the encoded displacement information; and
texture map processing comprising:

encoding a texture map generated based on the original mesh and the reconstructed mesh; and
generating a texture map bitstream.

15. The method of claim 14, wherein the base mesh processing further comprises:

generating additional vertices by subdividing the base mesh at least once; and
determining levels varying with a number of iterations of the subdivision.

16. The method of claim 14, wherein the displacement information processing further comprises:
encoding the displacement information for each of the determined levels and generating the displacement vector bitstream.

17. The method of claim 16, wherein the displacement information processing further comprises:

based on that values of the displacement information for a specific level among the levels are zero vectors, skipping the encoding for the specific level; and
transmitting, in the signaling information, flag information indicating that the encoding of the displacement information for the specific level is skipped.

18. A computer-readable recording medium, coupled to a computer that is hardware, having recorded thereon a computer program for executing the method of claim 13.

# FIG. 1

```
┌─────────────────────────────┐ 100      ┌─────────────────────────────┐ 110
│    TRANSMISSION             │          │      RECEPTION             │
│      DEVICE                 │          │       DEVICE               │
│            ┌─────────────┐101│          │         ┌─────────────┐114 │
│            │ Dynamic Mesh│   │          │         │  Renderer   │    │
│            │   Video     │   │          │         └─────────────┘    │
│            │ Acquisition │   │          │                            │
│            └─────────────┘   │          │         ┌─────────────┐113 │
│            ┌─────────────┐102│          │         │ Dynamic Mesh│    │
│            │ Dynamic Mesh│   │          │         │   Video     │    │
│            │   Video     │   │          │         │  Decoder    │    │
│            │  Encoder    │   │          │         └─────────────┘    │
│            └─────────────┘   │          │         ┌─────────────┐112 │
│            ┌─────────────┐103│          │         │ File/Segment│    │
│            │ File/Segment│   │          │         │ Decapsulation│   │
│            │Encapsulation│   │          │         │   Module    │    │
│            │   Module    │   │          │         └─────────────┘    │
│            └─────────────┘   │          │         ┌─────────────┐111 │
│            ┌─────────────┐104│ (Compressed)       │  Receiver   │    │
│            │ Transmitter │   │  Bitstream         │(Communication│   │
│            │(Communication│──┼──────────────────→│   Module)   │    │
│            │   Module)   │   │          │         └─────────────┘    │
│            └─────────────┘   │          │                            │
└─────────────────────────────┘          └─────────────────────────────┘
                              ┌──────────────┐
                              │  Feedback    │
                              │ Information  │
                              └──────────────┘
```

# FIG. 2

Feedback

Static of dynamic
Mesh M(i)

Attribute map
A(i)

Pre-processing

Base mesh
m(i)

Displacements
d(i)

Encoder

Compressed bitstream
b(i)

200

201

EP 4 697 722 A1

# FIG. 3

Pre-processing     200

Input Mesh

Mesh Decimation

Decimated mesh

Atlas Parameterization

Decimated mesh with tex coord

Fitting Subdivision surface    300

GoF Generation

GoF info

Displacements

Base mesh

Encoder    201

# FIG. 4

original

1st subdivision
result

2nd subdivision
result

FIG. 5

300

Fitted
subdiv. mesh →

Recon.
Base → Subdivision
mesh

Subdivided
recon. Base
mesh →

Compute Local
Coordinates
System
(Optional) →

Compute
Displacements →

Displacements
$(d_x, d_y, d_z)$ or $(d_n, d_t, d_b)$

# FIG. 6

Input Mesh → Pre Processing (200) → base mesh m(i) → Quantization (411) → Static Mesh Encoder (412) → Compressed base mesh bitstream → MUX (430) → Compressed bitstream

Static Mesh Encoder (412) → (413) Static Mesh Decoder → (414) Inverse Quant. → Recon base mesh m'(i) (415) → Compute Displacements → displacements d(i) (416) → Forward Linear Lifting → Lifting coefficients e(i) (417) → Quantization → Quantized Lifting coefficients e'(i) (418) → Image Packing (419) → Video Encoding (420) → Compressed displacements bitstream → MUX (430)

Fitted subdiv mesh → Compute Displacements (415)

Video Encoding (420) → Video Decoding (421) → Image Unpacking (422) → Inverse Quant. → Inverse Linear Lifting (423) → Recon displacements d'(i) → Reconstruct deformed mesh (424) → Recon deformed mesh DM'(i) → Attribute Transfer (425)

Input Attribute map A(i) → Attribute Transfer (425) → Generate attribute map A'(i) → Push-Pull Padding (426) → Color Space conversion (427) → Video Encoding (428) → Compressed attribute bitstream → MUX (430)

201

# FIG. 7

Input Mesh → 200 Pre Processing → base mesh m(i) → 511 Quantization

201 → 513 Motion Encoder → Reconstruction of base mesh 514 → Inverse Quant. 515 → Recon base mesh m'(i)

512 Recon quantized ref base mesh m'(j)

Compressed motion bitstream → MUX (530) → Compressed bitstream

Fitted subdiv mesh → Compute Displacements → displacements d(i) 516 → Wavelet Transform → Lifting coefficients e(i) 517 → Quantization → Quantized Lifting coefficients e'(i) 518 → Image Packing 519 → Video Encoding 520 → Video Decoding 521 → Image Unpacking

Compressed displacements bitstream → MUX

522 Inverse Quant.

523 Inverse Linear Lifting → 525 Recon displacements d'(i) → Reconstruct deformed mesh → Recon deformed mesh DM'(i) 526

525 Attribute Transfer → Generate attribute map A'(i) → 527 Push-Pull Padding → Color Space conversion → Video Encoding 528 → Compressed attribute bitstream → MUX

Input Attribute map A(i) → 525

EP 4 697 722 A1

# FIG. 8

original

1st subdivision result

2nd subdivision result

$LoD_0: \oslash$

$LoD_1: \oslash + \circ$

$LoD_2: \oslash + \circ + \odot$

| P0, P3, P5, P6 | P1, P4, P7, P2, P10 | P8, P9, P11, P12, ... |

$LoD_0$

$LoD_1$

$LoD_2$

Residual

Split → pred → update

$LoD_2$

$LoD_1$

$LoD_1'$

Residual

Split → pred → update

$LoD_1'$

$LoD_0'$

$LoD_0''$

Prediction process:

$$\text{Signal}(v) \leftarrow \text{Signal}(v) - \frac{1}{2}\left(\text{Signal}(v_1) + \text{Signal}(v_2)\right)$$

Update process:

$$\text{Signal}(v_1) \leftarrow \text{Signal}(v_1) + \frac{1}{8}\text{Signal}(v)$$

$$\text{Signal}(v_2) \leftarrow \text{Signal}(v_2) + \frac{1}{8}\text{Signal}(v)$$

$v_1$

$v$

$v_2$

# FIG. 9

Lifting coefficients

n = # of vertex of the subdivied base mesh

| $C_0$ | $C_1$ | $C_2$ | $C_3$ | $C_4$ | $C_5$ | $\cdots$ | $C_{n-3}$ | $C_{n-2}$ | $C_{n-1}$ |

Low frequency(LoD$_0$)     High frequency

Packing

16개

h개

16

16

16

$C_0 \rightarrow C_1$    $C_4 \rightarrow C_5$    $\cdots$

$C_2 \rightarrow C_3$      $\cdots$

$\cdots$

$\cdots$

16

16

$\longrightarrow$ 2D Morton code

# FIG. 10

# FIG. 11

EP 4 697 722 A1

# FIG. 12

# FIG. 13

EP 4 697 722 A1

# FIG. 14

# FIG. 15

EP 4 697 722 A1

# FIG. 16

# FIG. 17

$$N$$

| $C_1$ | $C_2$ | ... | $C_{N_0}$ | $C_{N_0+1}$ | ... | $C_{N_1}$ | ... | $C_{N-2}$ | $C_{N-1}$ | $C_N$ |

$$N_0(LoD_0 = R_0) \qquad N_1 - N_0(R_1)$$

...

$$N_1(LoD_1)$$

# FIG. 18

Frame padding area

FIG. 19

dispR_0

Padding area

dispR_1

Padding area

dispR_0

dispR_1

Padding area

dispR_0

dispR_1

dispR_2

Padding area

dispR_2

Padding area

dispR_2

Padding area

Packing transform coefficients of
$R_0$, $R_1$, and $R_2$ into one frame
(a)

Packing transform coefficients of
$R_0$, $R_1$, and $R_2$ into separate frames
(b)

Packing transform coefficients of
$R_0$ and $R_1$ into one frame and
transform coefficients of $R_2$ into another frame
(c)

EP 4 697 722 A1

# FIG. 20

FIG. 21

Base Mesh Bitstream → 15011 → [Motion Vector Decoder 15012] / [Static Mesh Decoder 15013] → Base Mesh Reconstructor 15014 → Mesh Subdivider 15015 → Mesh Reconstructor 15016 → Reconstructed Mesh

Displacement Vector Bitstream → Displacement Vector Decoder 15017 → Displacement Vector Inverse Quantizer 15018 → Displacement Vector Inverse Transformer 15019 → Displacement Vector Coordinate Inverse Transformer 15020 → Mesh Reconstructor

Texture Map Bitstream → Texture Map Decoder 15021 → Texture Map Bitstream → Texture Map → Reconstructed Mesh

FIG. 22

16011 Reconstructed Mesh Quality Determiner

Displacement Vector Bitstream

16012 Displacement Vector Bitstream Parser

16013 zeroDispFlag parser

16014 zeroDispFlag == 1?

Yes

16015 Displacement Vector Transform Coefficient Zero Vector Deriver

No

16016 Displacement Vector Transform Coefficient Decoder

16017 Displacement Vector Transform Coefficient Inverse Quantizer

16018 Displacement Vector Transform Coefficient Inverse Transformer

Reconstructed Displacement Vector

16021 Start

16022 Displacement Vector Transform Coefficient Video Codec-Based Decoder

16023 Displacement Vector Transform Coefficient Unpacker

16024 Displacement Vector Transform Coefficient Zero Run-Length Decoder

16025 Displacement Vector Transform Coefficient Arithmetic Decoder

End

EP 4 697 722 A1

# FIG. 23

# FIG. 24

Start → Mesh Quality Setter 17011 → Target number of vertices → Base Mesh Subdivision Calculator 18011 → Reconstructed Mesh Subdivision Iteration Count Determiner 18013 → TargetLoD

17012

# FIG. 25

| decode_displacement_data() { | Descriptor |
|---|---|
| ... _____19011 | |
| zeroDispFlag | u(1) |
| if(zeroDispFlag==1) { | |
| for(i=LoD_R(L-1)_vertex_num; i<LoD_R(L)_vertex_num; i++) { | |
| dispCoef[i] = {0,0,0} | |
| } | |
| else { | |
| decode_displacement() | |
| } | |
| ... | |
| } | |

# FIG. 26

| Encode mesh data | ~ 21011 |
|---|---|

↓

| Transmit bitstream containing mesh data | ~ 21012 |
|---|---|

# FIG. 27

| Receive bitstream containing mesh data | ～22011 |
|---|---|
| ↓ | |
| Decode mesh data | ～22012 |

## INTERNATIONAL SEARCH REPORT

| International application No. |
|---|
| **PCT/KR2024/004826** |

**A. CLASSIFICATION OF SUBJECT MATTER**

**H04N 19/597**(2014.01)i; **H04N 19/30**(2014.01)i; **H04N 19/85**(2014.01)i; **H04N 19/124**(2014.01)i; **H04N 19/105**(2014.01)i

According to International Patent Classification (IPC) or to both national classification and IPC

**B. FIELDS SEARCHED**

Minimum documentation searched (classification system followed by classification symbols)

H04N 19/597(2014.01); G06T 17/20(2006.01); G06T 3/40(2006.01); G06T 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 베이스 메쉬(base mesh), 비트스트림(bitstream), 변위(displacement), 벡터 (vector), 텍스처 맵(texture map)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | MAMMOU, Khaled et al. Video and Subdivision based Mesh Coding. 2022 10th European Workshop on Visual Information Processing (EUVIP). pp. 1-6, 14 September 2022.<br>See pages 1-5; and figures 1 and 3-4. | 1-2,4,7-9<br>6,11-16,18<br>3,5,10,17 |
| Y | US 2023-0014820 A1 (TENCENT AMERICA LLC) 19 January 2023 (2023-01-19)<br>See paragraphs [0073] and [0177]; and figure 5. | 6,11-16,18 |
| A | US 2023-0030913 A1 (APPLE INC.) 02 February 2023 (2023-02-02)<br>See paragraphs [0006]-[0016]; and claims 1-8. | 1-18 |
| A | JP 2021-022122 A (CANON INC.) 18 February 2021 (2021-02-18)<br>See paragraph [0008]; and claims 1-8. | 1-18 |
| A | KR 10-2021-0096285 A (SAMSUNG ELECTRONICS CO., LTD.) 04 August 2021 (2021-08-04)<br>See paragraphs [0009]-[0012]; and claims 1-8. | 1-18 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 July 2024** | **29 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| US | 2023-0014820 | A1 | 19 January 2023 | CN | 116635904 | A | 22 August 2023 |
| | | | | EP | 4182890 | A1 | 24 May 2023 |
| | | | | JP | 2023-547173 | A | 09 November 2023 |
| | | | | KR | 10-2023-0043929 | A | 31 March 2023 |
| | | | | WO | 2023-004241 | A1 | 26 January 2023 |
| US | 2023-0030913 | A1 | 02 February 2023 | US | 11450030 | B2 | 20 September 2022 |
| | | | | US | 11783508 | B2 | 10 October 2023 |
| | | | | US | 2021-0090301 | A1 | 25 March 2021 |
| | | | | US | 2023-0401751 | A1 | 14 December 2023 |
| | | | | WO | 2021-062044 | A1 | 01 April 2021 |
| JP | 2021-022122 | A | 18 February 2021 | JP | 7442993 | B2 | 05 March 2024 |
| KR | 10-2021-0096285 | A | 04 August 2021 | US | 2022-0028119 | A1 | 27 January 2022 |
| | | | | WO | 2020-122675 | A1 | 18 June 2020 |

Form PCT/ISA/210 (patent family annex) (July 2022)